# EUROPEAN PATENT SPECIFICATION

(11) **EP 2 875 981 B1**
(45) Date of publication and mention of the grant of the patent: **06.12.2017**
(21) Application number: 14190244.5
(22) Date of filing: 24.10.2014
(51) Int. Cl.: B60K 37/06

(54) **Saddle type vehicle with display on the steering handle for indicating appropriate vehicle characteristic changes**
Sattelfahrzeug
Véhicule à selle

(30) Priority: 31.10.2013 JP 2013227009
(43) Date of publication of application: 27.05.2015
(73) Proprietor: Yamaha Hatsudoki Kabushiki Kaisha, Iwata-shi, Shizuoka 438-8501 (JP)
(72) Inventor: Watanabe, Takashi, Iwata-shi, Shizuoka 438-8501 (JP); Yagi, Toshiki, Iwata-Shi, Shizuoka 438-8501 (JP)
(74) Representative: Grünecker Patent- und Rechtsanwälte PartG mbB

(56) References cited:
- EP-A1- 2 607 141
- EP-A2- 2 211 075
- DE-A1-102008 064 023
- JP-A- 2006 290 182
- US-A1- 2011 095 878

## Description

The present invention relates to a saddle type vehicle according to the preamble of independent claim 1, and particularly relates to a saddle type vehicle that the rider is allowed to change setting contents. Such a saddle type vehicle can be taken from the prior art document EP 2 211 075 A2.

Moreover, prior art document DE 10 2008 064 023 A discloses a method and device that involves representing a current operating point such as idling cycle, deceleration fuel cutoff and gears of a motor vehicle on an optical display unit in connection with engine efficiency ranges. The individual engine efficiency ranges are represented differently according to corresponding evaluation of the ranges. The evaluation of the ranges is made in different stages. The stages representing the ranges, which are limited by maximum and minimum possible efficiencies, respectively, are displayed on the display unit in different colors. The current operating point in connection with motor efficiency regions and contours of a specific fuel consumption of the optical display unit is shown as a clam of characteristics. The current operating point in connection with motor efficiency regions is output on the visual display unit as a first bar graph. Potential operating points are shown, which would result when starting from a current gear stage is shifted up or switched down. The potential operating points are output each in a further bar display first in addition to the bar display are output. The further bar displays are arranged adjacent and associated to the bar display for current operating point.

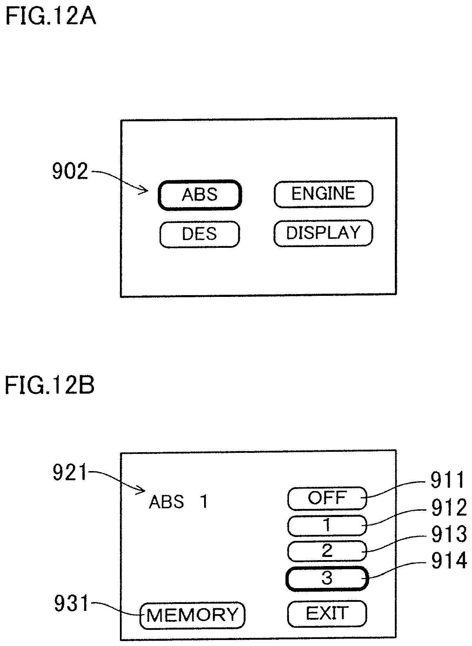

A known saddle type vehicle is provided with plural apparatuses capable of changing a characteristic of a vehicle such as a traction control system. As an example of known arrangements, Non-Patent Literature 1 ("Owner's Manual (written in Japanese) SUPERBIKE 1199PANIGALE S 1199PANIGALE S ABS", Ducati Motor Holding spa, February 2012, cod 913.7.190.1B) recites that, on a screen for changing a vehicle characteristic, plural characteristic states are displayed as candidates from which a characteristic state is selected, while the current state of the vehicle characteristic is displayed. More specifically, to begin with, a screen shown in FIG. 12A is displayed. This screen includes plural buttons 902 indicating plural controllers (vehicle characteristic change controllers) capable of changing a vehicle characteristic. Among these buttons 902, a button 902 corresponding to a particular vehicle characteristic change controller is selected. With this, the current state of the selected vehicle characteristic change controller is displayed by a character string 921, and buttons 911 to 914 indicating levels to each of which the vehicle characteristic is changeable are displayed. A button corresponding to a level to which the rider wishes to change is selected from the buttons, and a button 931 for confirmation is selected. As a result, the current state is changed.

In Non-Patent Literature 1, a screen for changing a vehicle characteristic displays only the currently-selected characteristic state. The rider is therefore required to change the vehicle characteristic by making a comparison with a previous characteristic state based on his/her memory, when adjusting the vehicle characteristic. If the rider does not remember the previous characteristic state, after repeating the adjustment of the vehicle characteristic over and over again, the rider may no longer recognize the position of the currently-selected characteristic state. In such a case, the rider may be at a loss in what manner to change the vehicle characteristic.

An object of the present invention is to provide a saddle type vehicle in which a vehicle characteristic is suitably adjustable in consideration of the position of the characteristic state of each characteristic, without relying on the rider's memory. Such an object is achieved by a saddle type vehicle according to claim 1.

A saddle type vehicle of the present invention includes: a vehicle body frame supporting a power source; a seat mounted on the vehicle body frame; a steering handle provided forward of the seat; a right grip section and a left grip section which are provided at a right end portion and a left end portion of the steering handle in a vehicle left/right direction, respectively; a display unit which is provided forward of the seat in a vehicle forward/rearward direction and between the right grip section and the left grip section in the vehicle left/right direction, and includes a display surface; an operation unit which is supported by the steering handle, is configured to be operable by a hand gripping at least one of the right grip section and the left grip section, and is electrically connected to the display unit; a vehicle characteristic change controller with which a vehicle characteristic is changeable as one of characteristic states is selected in accordance with a content of an operation of the operation unit, wherein the display unit is configured to display, on the display surface, a vehicle characteristic icon indicating the vehicle characteristic and vehicle characteristic state icons indicating characteristic states of the vehicle characteristic in an aspect of being lined up in one of the vehicle forward/rearward direction and the vehicle left/right direction, and an icon of at least a currently-selected characteristic state among the vehicle characteristic state icons in an aspect different from aspects of the other icons, and an icon of a characteristic state which is set in advance in an aspect different from the aspect of the icon of the currently-selected characteristic state and the aspects of the other icons, when the currently-selected characteristic state is different from the characteristic state set in advance.

In the present invention, the aspect of the currently-selected characteristic state is arranged to be different from the aspects of the other icons. When the currently-selected characteristic state is different from the characteristic state set in advance, the aspect of the icon corresponding to the characteristic state set in advance is different from both the aspect of the icon of the currently-selected characteristic state and the aspects of the other icons. With this, it is possible to change a vehicle characteristic in consideration of the position of the currently-selected characteristic state with respect to the characteristic state set in advance. Furthermore, the vehicle characteristic icon and the vehicle characteristic state icons are lined up on a line and the aspects are differentiated as above. It is therefore possible to recognize the positional relations of the icons on the line, for both the characteristic state set in advance and the currently-selected characteristic state. With this, it is possible to recognize the contents of the characteristic states from the positional relations of the icons, without directly reading the contents of the icons from the icons.

In addition to the above, the display unit is provided between the left and right grip sections. The rider sitting on the seat and gripping the grips therefore looks down at the display surface of the display unit from above. In this state, the forward/rearward direction is perceived by the rider as the direction along the central axis of his/her body. Meanwhile, the left/right direction is perceived as the direction connecting the left and right grip portions with each other, i.e., the direction connecting the positions where the respective hands hold the grip portions with each other. In this state, on the display surface of the display unit, the vehicle characteristic icon and the characteristic state icon are lined up in the vehicle forward/rearward direction or the vehicle left/right direction. For this reason, for the rider sitting on the seat and gripping the grips, the direction in which the icons are lined up is either the direction corresponding to the central axis of the body or the direction connecting the positions where the respective hands hold the grips with each other, which intersects with the central axis of the body. As such, for the rider sitting on the seat and gripping the grips, the icons are lined up in one of the two directions that refer to the posture of the rider. Because this makes it easy to correctly recognize the layout of the icons, it is possible to correctly recognize the setting state of the vehicle characteristic, which is indicated by the layout of the icons. It is therefore possible to properly recognize both the characteristic state set in advance and the characteristic state which is currently selected.

Because of the above, the rider is able to properly adjust the vehicle characteristic in consideration of the position of the characteristic state of each characteristic, even if he/she does not remember the content previously set.

The saddle type vehicle of the present invention is preferably arranged such that, when the vehicle characteristic is a first vehicle characteristic, the vehicle characteristic icon is a first vehicle characteristic icon, and the vehicle characteristic state icons are first vehicle characteristic state icons, and the display unit is further configured to display, on the display surface, a second vehicle characteristic icon indicating a second vehicle characteristic and second vehicle characteristic state icons indicating characteristic states of the second vehicle characteristic in an aspect of being lined up in the one of the vehicle forward/rearward direction and the vehicle left/right direction, the first vehicle characteristic icon and the second vehicle characteristic icon in an aspect of being lined up in the other one of the vehicle forward/rearward direction and the vehicle left/right direction, and the first vehicle characteristic state icons and the second vehicle characteristic state icons in an aspect of being lined up in the other one of the directions. More preferably, the display unit is further configured to display, on the display surface, an icon of at least a currently selected characteristic state among the second vehicle characteristic state icons in an aspect different from aspects of the other icons, and an icon of the characteristic state sent in advance in an aspect different from both of the aspect of the icon of the currently-selected characteristic state and the aspects of the other icons, when the currently-selected characteristic state is different from the characteristic state set in advance.

According to this arrangement, regarding the two characteristics, i.e., the first vehicle characteristic and the second vehicle characteristic, the icon of the currently-selected characteristic state and the icon of the characteristic state set in advance are displayed in aspects different from those of the other icons. For this reason, it is possible to take into account not only the position of the characteristic state of each characteristic but also the relative positions of the two characteristics. Furthermore, the icons of the second vehicle characteristic and the icon of the first vehicle characteristic are lined up in the other one of the vehicle forward/rearward direction and the vehicle left/right direction. For this reason, the icons are lined up in both of the direction corresponding to the central axis of the body (vehicle forward/rearward direction) and the direction connecting the positions where the respective hands hold the grips with each other (vehicle left/right direction), for the rider sitting on the seat and gripping the grips. The icons are therefore lined up in two directions that refer to the posture of the rider for the rider sitting on the seat and gripping the grips, and hence the rider is likely to correctly recognize the layout of the icons. Because both the characteristic state set in advance and the characteristic state currently selected are properly recognized, the vehicle characteristics are more properly adjusted.

The saddle type vehicle of the present invention is preferably arranged to further include: a related characteristic storage configured to store a related characteristic in which a first vehicle characteristic state which is one of the characteristic states of the first vehicle characteristic is associated with a second vehicle characteristic state which is one of the characteristic states of the second vehicle characteristic, wherein the related characteristic storage is configured to store at least a first related characteristic and a second related characteristic, one of which is selected in accordance with a content of an operation of the operation unit. More preferably, the display unit is further configured to display, on the display surface, based on the related characteristic stored in the related characteristic storage, a related characteristic icon indicating the related characteristic, a first related characteristic icon indicating the first related characteristic, and a second related characteristic icon indicating the second related characteristic in an aspect of being lined up in the one of the vehicle forward/rearward direction and the vehicle left/right direction. Even more preferably, the display unit is further configured to display, on the display surface, based on the related characteristic stored in the related characteristic storage, the related characteristic icon and the first vehicle characteristic icon in an aspect of being lined up in the other one of the vehicle forward/rearward direction and the vehicle left/right direction, the first related characteristic icon and the first vehicle characteristic state icons in an aspect of being lined up in the other one of the vehicle forward/rearward direction and the vehicle left/right direction, and the second related characteristic icon and the first vehicle characteristic state icons in an aspect of being lined up in the other one of the vehicle forward/rearward direction and the vehicle left/right direction. Further preferably, the display unit is further configured to display, on the display surface, based on the related characteristic stored in the related characteristic storage, an icon of at least currently selected related characteristic among the first related characteristic and the second related characteristic in an aspect different from aspects of the other icons. Even further preferably, the display unit is further configured to display, on the display surface, based on the related characteristic stored in the related characteristic storage, each of the icons of the characteristic states associated with the currently selected related characteristic among the first characteristic state icons and the second characteristic state icons in an aspect different from aspects of the other icons.

According to this arrangement, because the characteristic states of each vehicle characteristic are associated with the related characteristic, it is possible to, for example, assign the use environments of the vehicle or the like so as to set characteristics corresponding to the rider's preferences in advance. In such a case, it is possible to easily reproduce the setting content suitable for the use environment, by selecting a related characteristic in accordance with the use environment of the vehicle. Furthermore, by changing the content of the characteristic state associated with each related characteristic, it is possible to finely adjust the vehicle characteristic in accordance with small situational differences. Furthermore, the related characteristic icon, the first related characteristic icon, and the second related characteristic icon are also lined up in one of the vehicle forward/rearward direction and the vehicle left/right direction, in the same manner as the vehicle characteristic icon and the vehicle characteristic state icons. The related characteristic icon and the vehicle characteristic icon are lined up in the other one of the vehicle forward/rearward direction and the vehicle left/right direction. Furthermore, the first related characteristic icon and the first vehicle characteristic state icons are lined up in the other one of the directions, and the second related characteristic icon and the first vehicle characteristic state icons are lined up in the other one of the directions. This makes it easy to recognize the relationship between the related characteristic and the characteristic state of each vehicle characteristic, with reference to the positional relations of the icons. Furthermore, for the rider sitting on the seat and gripping the grips, the layout of the icons including the icons regarding the related characteristic is correctly recognizable.

In regard to the above, provided that only the currently-selected characteristic state is displayed on the display surface, the rider is required to change the setting content by making a comparison with the previous setting based on his/her memory. When not remembering the previous setting, after repeating the adjustment of the setting content over and over again, the rider may no longer recognize the position of the current setting of each related characteristic. In such a case, the rider may be at a loss in what manner to change the setting.

In this regard, according to the present invention, the aspect of the icon corresponding to the characteristic state set in advance is arranged to be different from both the aspect of the icon of the currently-selected characteristic state and the aspects of the other icons. This makes it possible to change the vehicle characteristic while recognizing how the currently-selected characteristic state is positioned with respect to the characteristic state set in advance, in the related characteristic. This makes it possible to properly adjust a vehicle characteristic in consideration of the position of the characteristic state in the related characteristic, even if the rider does not remember the setting content previously set.

The saddle type vehicle of the present invention is preferably arranged such that the number of times of an operation of the operation unit required to arrange one of the first related characteristic and the second related characteristic to be selectable after the display unit starts to display the first vehicle characteristic icon, the second vehicle characteristic icon, the first vehicle characteristic state icons, the second vehicle characteristic state icons, the related characteristic icon, the first related characteristic icon, and the second related characteristic icon is smaller than the number of times of an operation of the operation unit required to arrange the first vehicle characteristic or the second vehicle characteristic to be selectable from the characteristic states.

According to this arrangement, because the number of times of the operation required to set the related characteristic to be selectable is relatively small, it is possible to easily realize the state in which the related characteristic is changeable. When the related characteristic is changed, the characteristic states set in advance for another related characteristic can be referred to. Therefore, when the state in which the related characteristic is changeable is easily achieved, it is easy to take into account of the position of the characteristic states of another related characteristic, and hence the vehicle characteristics are more properly adjusted.

The saddle type vehicle of the present invention is preferably arranged such that the vehicle characteristic becomes selectable from the characteristic states while the display unit is displaying the vehicle characteristic icon and the vehicle characteristic state icons on the display surface.

With this arrangement, it is possible to change the related characteristic and the vehicle characteristic while the icon regarding the related characteristic and the icons regarding the vehicle characteristics and their characteristic states being displayed. This makes it possible to change the related characteristic and the vehicle characteristics while recognizing the relations of the related characteristic, the vehicle characteristics, and the characteristic states. It is therefore possible to properly adjust the vehicle characteristic with reference to the characteristic states set in advance, as compared to a case where the vehicle characteristic is changeable only after the shifting the display surface to display another screen.

The saddle type vehicle of the present invention is preferably arranged such that the display surface is substantially rectangular in shape. More preferably, the saddle type vehicle of the present invention is arranged such that the one of the vehicle forward/rearward direction and the vehicle left/right direction is in parallel to short sides of the rectangular display surface, and the other one of the vehicle forward/rearward direction and the vehicle left/right direction is in parallel to the long sides of the rectangular display surface.

According to this arrangement, the range of the display surface in the direction in which the vehicle characteristic icons are lined up (the other one of the directions) is wider than the range in the direction in which the vehicle characteristic state icons are lined up (the one of the directions). It is therefore easy to display the icons of the vehicle characteristics simultaneously. Therefore the icons are likely to be provided in one screen even if there are plural vehicle characteristics. Because this makes it less necessary to perform an operation after the shift to another screen, it is possible to properly adjust the vehicle characteristics with reference to the characteristic states set in advance.

### BRIEF DESCRIPTION OF THE DRAWINGS

FIG. 1 is a side view of a motorcycle of an embodiment of the present invention.
FIG. 2 shows a display surface of a display unit in the direction indicated by the arrow A in FIG. 1.
FIG. 3 is a functional block diagram of the structure of a control system of a motorcycle.
FIG. 4 shows a menu screen which allows the rider to select a setting screen for changing a vehicle characteristic.
FIG. 5 is a drawing viewed in the direction indicated by the arrow A in FIG. 1, showing a state where a vehicle characteristic screen is displayed on the display surface of the display unit.
FIG. 6 shows the vehicle characteristic screen in which a characteristic state icon column regarding a TCS characteristic is displayed in a display aspect different from the display aspect in FIG. 5.
FIG. 7 shows the vehicle characteristic screen in which a cursor has been moved from the location shown in FIG. 5.
FIG. 8 shows the vehicle characteristic screen in which a related characteristic is in a changeable state.
FIG. 9 shows the vehicle characteristic screen in which a PWR characteristic and a TCS characteristic are in a changeable state.
FIG. 10 shows the display surface of the display unit on which a SUS characteristic screen is displayed.
FIG. 11 shows a vehicle characteristic screen of a modification.
FIG. 12A shows a screen of a known technology, on which a vehicle characteristic change controller for changing a setting state is selected. FIG.12B shows a screen of a known technology, showing how the setting state is changed in each vehicle characteristic change controller.

### DESCRIPTION OF THE PREFERRED EMBODIMENTS

The following will describe a saddle type vehicle of an embodiment of the present invention, with a motorcycle 1 taken as an example. It is noted that the saddle type vehicle according to the present invention is not limited to the motorcycle 1. The saddle type vehicle is of any type of vehicles on which an occupant rides. The saddle type vehicle may be a motorcycle of an off-road type, a scooter type, a moped type, or any other types. Examples of the saddle type vehicle of the present invention encompass tricycles, four-wheeled buggies (ATVs: All Terrain Vehicles), and personal water crafts. In the descriptions below, forward/rearward directions indicate forward and rearward directions from the viewpoint of the rider R sitting on a later-described seat 11 of the motorcycle 1, whereas left/right directions indicate leftward and rightward directions (vehicle width directions) from the viewpoint of the rider R sitting on the seat 11. The directions indicated by arrows F and B indicate forward and rearward directions, respectively. The directions indicated by arrows L and R indicate leftward and rightward directions, respectively.

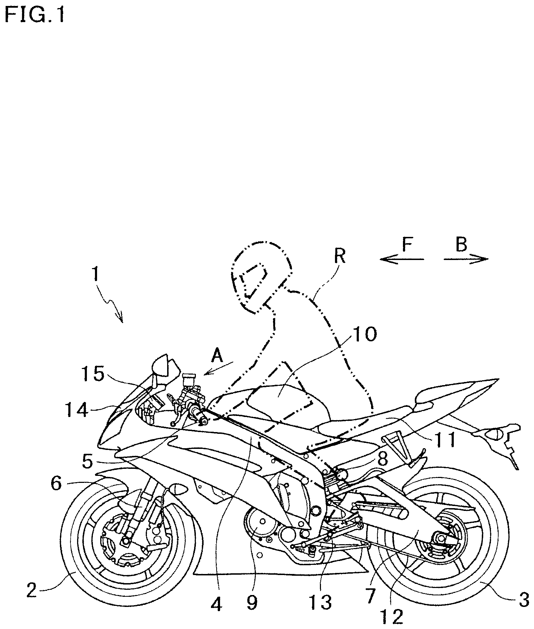

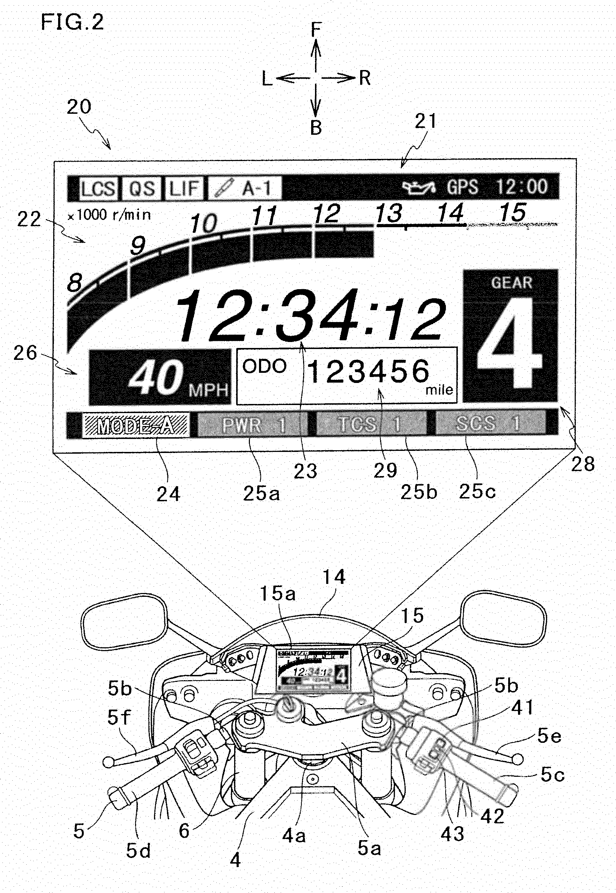

As shown in FIG. 1, the motorcycle 1 is provided with a front wheel 2, a rear wheel 3, a vehicle body frame 4, and a seat 11. The seat 11 is supported by the vehicle body frame 4. As shown in FIG. 2, a head pipe 4a is provided forward of the seat 11 of the vehicle body frame 4. Into the head pipe 4a, a steering shaft (not illustrated) is rotatably inserted. To an upper end of the steering shaft is fixed a handle crown 5a.

To the left and right end portions of the handle crown 5a, upper end portions of the front forks 6 are fixed, respectively. The lower end portions of these front forks 6 support the front wheel 2. To the upper end portions of the two front forks, handlebars 5b are fixed, respectively.

On the peripheral surfaces of the two handlebars 5b, grips 5c and 5d (right grip section and left grip section) are attached, respectively. The right grip 5c is a throttle grip. To the right handlebar 5b is attached a brake lever 5e, whereas to the left handlebar 5b is attached a clutch lever 5f. On the handle crown 5a and the handlebars 5b, plural types of switches are provided. The handlebars 5b and the grips 5c and 5d constitute a handle 5 (steering handle).

In the vicinity of the grip 5c, an upper switch 41, a selection switch 42, and a lower switch 43 are provided. These three switches are supported by the handle 5. These switches are provided to the immediate left of the grip 5c to allow a finger of the rider R gripping the grip 5c to reach the switches. The rider R is therefore able to operate these switches while gripping the grip 5c. Alternatively, the three switches may be disposed in a range reachable by a hand (finger) of the rider R gripping the grip 5d. Alternatively, at least one of the switches may be provided in the vicinity of the grip 5c whereas the remaining switches may be provided in the vicinity of the grip 5d. For example, the upper switch 41 and the lower switch 43 are provided in the vicinity of the grip 5c whereas the selection switch 42 is provided in the vicinity of the grip 5d. From the far side to the near side in FIG. 2, the three switches are lined up along the circumference of the handle 5 in the order as follows: the upper switch 41, the selection switch 42, and the lower switch 43. As described later, the upper switch 41 is a switch used for performing an upward operation. The lower switch 43 is a switch used for performing a downward operation. The selection switch 42 is a switch used for performing selection, determination, or the like. Hereinafter, these switches may be abbreviated as the switch 41, the switch 42, and the switch 43.

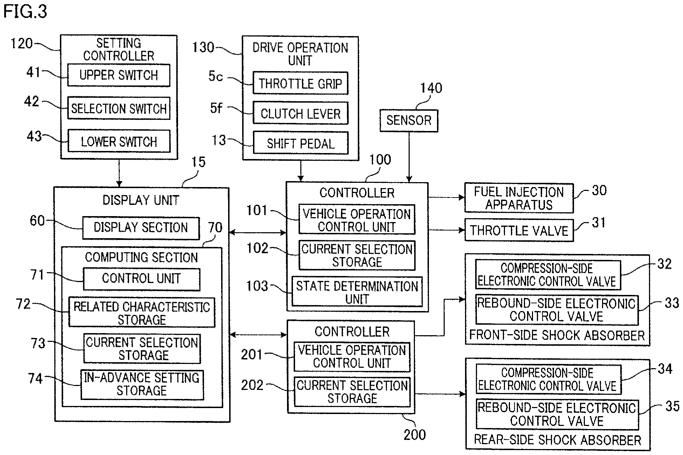

Each of the front forks 6 is provided with a front-side oil-type shock absorber 32 (not illustrated) absorbing vibrations in the up/down directions. In the shock absorber, air may be used in place of the oil. This shock absorber is provided with a compression-side electronic control valve 32 and a rebound-side electronic control valve 33 (see FIG. 3) by which the flow resistance of the hydraulic oil (or air) is adjustable by electronic control. As the flow resistance of the hydraulic oil (or air) is adjusted by controlling the valve, the damping force characteristics of the shock absorber are adjustable. The compression-side electronic control valve 32 is used for adjusting a damping force characteristic on the compression side. The rebound-side electronic control valve 33 is used for adjusting a damping force characteristic on the rebound side.

At a rear portion of the vehicle body frame 4, the front end portion of the swingarm 7 is supported in a swingable manner. The rear end portion of this swingarm 7 supports the rear wheel 3. A part of the swingarm 7 which is different from the swinging center of the swingarm 7 is connected with the vehicle body frame 4 via a rear suspension 8 which is configured to absorb shocks in the up/down directions. The rear suspension 8 is provided with a rear-side shock absorber which is of the same type as the front-side shock absorber. This shock absorber is provided with a compression-side electronic control valve 34 and a rebound-side electronic control valve 35 (see FIG. 3). As the flow resistance of the hydraulic oil (or air) is adjusted by controlling these valves, the damping force characteristics of the rear-side shock absorber are adjustable on the compression side and on the rebound side, respectively.

Furthermore, the vehicle body frame 4 supports a water-cooled engine (power source) 9. This engine 9 may be of an air-cooled type. The vehicle body frame 4 may directly support the engine 9 or indirectly support the engine 9 through another member. Upward of the engine 9 is provided a fuel tank 10. Rearward of the fuel tank 10 is provided the seat 11. Upward of the engine 9 are provided a throttle body and an air cleaner (not illustrated). Into the engine 9, air cleaned by the air cleaner flows through an intake passage in the throttle body. On the intake passage of the throttle body, a throttle valve 31 (see FIG. 3) is provided to change the amount of air flowing in the passage. The throttle body is provided with a fuel injection apparatus 30 (see FIG. 3). The fuel in the fuel tank 10 is injected by the fuel injection apparatus 30. The air introduced through the throttle body is introduced into a combustion chamber in the engine 9, together with the fuel injected from the fuel injection apparatus 30. The output characteristic of the engine 9 is changeable by adjusting an amount of the injected fuel from the fuel injection apparatus 30 and the aperture of the throttle valve 31. The fuel injection apparatus 30 may be provided in the engine 9.

Rearward of the engine 9 is provided a transmission (not illustrated) including multi-stage shift gears. The driving force of the engine 9 is transmitted to the rear wheel 3 via the transmission and the chain 12. To the left of the transmission is provided a shift pedal 13 used for switching the gears of the transmission.

Upward of the front wheel 2 and forward of the handle 5, a front cowling 14 is provided. Between the front cowling 14 and the handle 5 is disposed a display unit 15. The display unit 15 may be disposed at any position on condition that the position is between the grip 5c and the grip 5d in the left/right direction and forward of the seat 11 in the forward/rearward direction. For example, the display unit 15 may be provided upward of the head pipe 4a. The display unit 15 includes a rectangular display surface 15a having long sides in parallel to the left/right direction and short sides in parallel to the forward/rearward direction. The display unit 15 is disposed to be inclined in the forward/reaward direction and the up/down direction such that the display surface 15a faces rearward and upward. The display unit 15 includes a display section 60 having the display surface 15a and a computing section 70 configured to control display contents on the display section 60 (see FIG. 3). In the display section 60, the display surface 15a of the display unit 15 is constituted by a dot matrix display capable of performing color image display, such as a liquid crystal display, a plasma display, and an organic EL display. The computing section 70 executes arithmetic operations of different types based on input signals from the switches 41 to 43. The details of the structure and the processing details of the computing section 70 will be given later.

The display surface 15a of the display section 60 displays information regarding a vehicle characteristic or the like. As the power is supplied to the display unit 15 in response to an operation of a switch, the display surface 15a automatically displays a basic screen in a track mode or a street mode. FIG. 2 shows an example of the basic screen 20 in the track mode. The basic screen 20 in the track mode and the basic screen in the street mode are switched by an operation of a switch.

The basic screen 20 in the track mode includes a vehicle state icon group 21, an engine revolution display 22, a lap time display 23, a related characteristic display 24, characteristic state displays 25a to 25c, a vehicle speed display 26, a gear position display 28, and a travel distance display 29. The vehicle state icon group 21 includes warning icons such as a hydraulic pressure warning icon and icons indicating vehicle states such as a vehicle characteristic icon. A vehicle characteristic icon is an icon indicating the state of a later-described vehicle characteristic. The engine revolution display 22 includes bar display having a length corresponding to a rotation speed. The lap time display 23 indicates a result of measurement of a lap time. The related characteristic display 24 indicates which one of later-described related characteristics A to D is currently selected. The characteristic state displays 25a to 25c show, in numbers, the characteristic states of a power characteristic, a traction control system characteristic, and a slide control system characteristic, which will be described later. The basic screen 20 allows the rider R to change a characteristic state or a related characteristic by operating the switches 41 to 43. This will be described below.

Now, the configuration of the control system of the motorcycle 1 will be described with reference to FIG. 3. The control system of the motorcycle 1 is constituted by members such as a display unit 15, controllers 100 and 200, a setting operation unit 120, a drive operation unit 130, and a sensor 140. These members are electrically connected with one another. The setting operation unit 120 and the drive operation unit 130 receive an operation from the rider R. The setting operation unit 120 is constituted by the above-described switches 41 to 43, and is mainly used for changing the setting of vehicle characteristics. The setting operation unit 120 corresponds to an operation unit of the present invention. The drive operation unit 130 is constituted by members such as the throttle grip 5c, the clutch lever 5f, and the shift pedal 13 described above, and is mainly used for the driving by the rider R. The sensor 140 includes different types of sensors, such as sensors for detecting the rotation speeds of the front wheel 2 and the rear wheel 3, a sensor for detecting an inclination angle of the vehicle, and a sensor for detecting the lateral acceleration.

Each of the controllers 100 and 200 is composed of hardware such as a CPU (Central Processing Unit), a ROM (Read Only Memory), a RAM (Random Access Memory), an ASIC (Application Specific Integrated Circuit) and software such as program data stored in the ROM and the RAM. The CPU executes information processings corresponding to the contents of operations that the setting operation unit 120 and the drive operation unit 130 receive and detection results of the sensor 140, based on the software such as the program data. The ASIC controls the operations of the members based on a result of the information processing above. In this manner, the following functional parts of the controllers 100 and 200 are realized.

As shown in FIG. 3, the controller 100 includes a vehicle operation control unit 101, a current selection storage 102, and a state determination unit 103. The vehicle operation control unit 101 controls the operations of the components of the vehicle. For example, the vehicle operation control unit 101 controls the output characteristic of the engine 9 by adjusting the amount of injected fuel from the fuel injection apparatus 30 and the aperture of the throttle valve 31. By this control, the vehicle operation control unit 101 controls different types of vehicle characteristics. Examples of the vehicle characteristics to be controlled include a power characteristic, a traction control system characteristic, a slide control system characteristic, a launch control system characteristic, a quick shift system characteristic, and a lift control system characteristic. Each of these vehicle characteristics has plural characteristic states. As described later, these characteristics are changeable as the rider R operates the setting operation unit 120 to select one of plural characteristic states.

The power characteristic is a characteristic regarding the degree of change in the aperture of the throttle with respect to the operation quantity of the throttle grip 5c. The traction control system characteristic is a characteristic regarding the traction control. The traction control is performed to restrain the slipping based on a difference between the rotation speeds of the front wheel 2 and the rear wheel 3 calculated from detection results of the sensor 140.

The slide control system characteristic is a characteristic regarding slide control performed to restrain the side slipping of the motorcycle 1. This slide control is performed based on the rotation speeds of the front wheel 2 and the rear wheel 3, the inclination angle of the vehicle, the lateral acceleration or the like, which are calculated from results of detections of the sensor 140. The launch control system characteristic is a characteristic regarding launch control. The launch control is performed to smoothly and rapidly start the motorcycle 1 in the stopped state. The quick shift system characteristic is a characteristic regarding quick shift. The quick shift is a control operation with which the shift up is achieved without requiring the operation of the throttle grip 5c and the clutch lever 5d.

The lift control system characteristic is a characteristic regarding lift control. The lift control is a control operation for restraining the lift of the front wheel 2 during the running, based on the rotation speeds of the front wheel 2 and the rear wheel 3, the angle (pitch) in the vehicle forward/rearward direction, or the like, which are calculated from results of detections by the sensor 140. The suspension characteristic is a characteristic regarding the control of the front-side shock absorber and the rear-side shock absorber. More specifically, the suspension characteristic corresponds to each of the damping force characteristics of these shock absorbers on the compression side and on the rebound side.

As described above, plural characteristic states are prepared for each characteristic. For example, each of the power characteristic, the traction control system characteristic, the slide control system characteristic, the launch control system characteristic, the quick shift system characteristic, and the lift control system characteristic has plural states of different levels, as characteristic states. Each of the levels corresponds to the degree of control of each characteristic. For example, the power characteristic is controlled by the vehicle operation control unit 101 in such a way that, the higher the level is, the smaller the output of the engine 9 with respect to a predetermined operation quantity of the throttle grip 5c is. In case of the traction control system characteristic, the characteristic is controlled such that, the higher the level is, the higher the degree of restraint of the slipping is. Except for the power characteristic, an on state and an off state are prepared for the vehicle characteristics. When a characteristic is in the off state, no control is performed by the vehicle operation control unit 101. This off state is one of the characteristic states of each characteristic.

The current selection storage 102 stores currently-selected levels of the power characteristic, the traction control system characteristic, the slide control system characteristic, the launch control system characteristic, the quick shift system characteristic, and the lift control system characteristic. In one setting example (hereinafter, setting example S), the current selection storage 102 stores a level 1 for the power characteristic, a level 2 for the traction control system characteristic, a level 3 for the slide control system characteristic, a level 1 for the launch control system characteristic, a level 1 for the quick shift system characteristic, and a level 1 for the lift control system characteristic.

The vehicle operation control unit 101 controls each vehicle characteristic in accordance with the content stored in the current selection storage 102. When the current selection storage 102 stores the above-described setting example S, the vehicle operation control unit 101 executes control in the level 1 for the power characteristic, control in the level 2 for the traction control system characteristic, control in the level 3 for the slide control system characteristic, control in the level 1 for the launch control system characteristic, control in the level 1 for the quick shift system characteristic, and control in the level 1 for the lift control system characteristic.

As described later, to the controller 100, the content stored in a related characteristic storage 72 of the display unit 15 is regularly sent from the display unit 15. The content sent to the controller 100 is used for updating the content stored in the current selection storage 102 on the controller 100 side. When the content having been sent is different from the content stored in the current selection storage 102 on the controller 100 side, the characteristic state of each vehicle characteristic is changed as the content stored in the current selection storage 102 is updated in line with the content having been sent. The characteristic state stored in the current selection storage 102 includes an important content regarding the control of the vehicle by the vehicle operation control unit 101. For this reason, changing the content of the characteristic state may not always be appropriate. In accordance with the state of the vehicle and/or the rider R, a time preferable to change the content may be limited.

For the reason above, based on a result of detection by the sensor 140, the state determination unit 103 determines whether the characteristic state of a vehicle characteristic is changeable. Whether the characteristic state is changeable is determined based on conditions set in advance. The conditions are set in accordance with the state of the vehicle and/or the rider R, for example, the state of the throttle, the posture of the rider R, whether the vehicle is running or not, and whether the rider R is riding on the vehicle or not. When the state determination unit 103 determines that the characteristic state of a vehicle characteristic is changeable, the controller 100 updates the content stored in the current selection storage 102 in line with the content sent from the display unit 15. When the content sent from the display unit 15 is different from the content stored in the current selection storage 102, the content stored in the current selection storage 102 is changed. Meanwhile, when the state determination unit 103 determines that the characteristic state of the vehicle characteristic is not changeable, the controller 100 does not update the content stored in the current selection storage 102.

The controller 200 includes a vehicle operation control unit 201 and a current selection storage 202. The vehicle operation control unit 201 controls the suspension characteristic which is one of the vehicle characteristics. The suspension characteristic is a characteristic regarding the control of the front-side shock absorber and the rear-side shock absorber. The vehicle operation control unit 201 controls the compression-side electronic control valves 32 and 34 and the rebound-side electronic control valves 33 and 35 so as to control the damping force characteristics on the compression side and the rebound side of each shock absorber.

The characteristic states of the suspension characteristic are automatic states 1 to 3 and manual states 1 to 3. Elements defining these states are, as described above, the damping force characteristics of the front-side shock absorber on the compression side and the rebound side and the damping force characteristics of the rear-side shock absorber on the compression side and the rebound side, i.e., four damping force characteristics in total. For each damping force characteristic, plural levels are prepared as characteristic states. In each automatic state, a level selected from plural levels is set in advance for each of the four damping force characteristics. In the automatic states 1 to 3, a level is set for each of the four damping force characteristics. The automatic states 1 to 3 are different from one another in the setting content of the level. When one of the automatic states 1 to 3 is selected, the vehicle operation control unit 201 performs control regarding the four damping force characteristics based on the setting content of the selected automatic state. In the manual states 1 to 3, the user is allowed to set the control levels of the four damping force characteristics at will. (How the levels are set will be described later). The vehicle operation control unit 201 controls the compression-side electronic control valve 32 or the like in such a way that, for example, the damping force increases as the level of each damping force characteristic increases. As described later, the suspension characteristic is changeable as the rider R selects one of the characteristic states by operating the setting operation unit 120.

The current selection storage 202 stores the currently-selected characteristic state for the suspension characteristic. In one setting example (hereinafter, setting example T), the current selection storage 202 stores the automatic state 1 for the suspension characteristic. The vehicle operation control unit 201 controls the suspension characteristic based on the content stored in the current selection storage 202. When the current selection storage 202 stores the setting example T, the vehicle operation control unit 201 controls the suspension characteristic based on the automatic state 1.

As described later, to the controller 200, the content stored in a related characteristic storage 72 of the display unit 15 is regularly sent from the display unit 15. The controller 200 updates the content stored in the current selection storage 202 to the content sent from the display unit 15. Therefore, when the content sent from the display unit 15 is different from the content stored in the current selection storage 202, the content stored in the current selection storage 202 is changed to the content sent from the display unit 15.

The controllers 100 and 200 regularly send the contents stored in the current selection storages 102 and 202 to the display unit 15. For example, when the content stored in the current selection storage 102 or 202 is changed to the content sent from the display unit 15, the content after the change is, by the regular sending after the change, sent from the controller 100 or 200 to the display unit 15 in a feedback manner. Based on a detection result by the sensor 140, the controller 100 sends the state of the vehicle and/or the rider R to the display unit 15. As described later, this state is used for the determination as to whether an operation of the setting operation unit 120 is valid or not in the display unit 15.

It is noted that any two of seven vehicle characteristics constituted by the six vehicle characteristics controlled by the vehicle operation control unit 101 and the suspension characteristic controlled by the vehicle operation control unit 201 correspond to a first vehicle characteristic and a second vehicle characteristic of the present invention. The vehicle operation control units 101 and 201 correspond to a first vehicle characteristic change controller and a second vehicle characteristic change controller of the present invention, in regard to any two of the seven vehicle characteristics. For example, there is a case where the vehicle operation control unit 101 solely corresponds to the first vehicle characteristic change controller and the second vehicle characteristic change controller of the present invention for any two of the six characteristics such as the PWR characteristic. In another case, the vehicle operation control unit 101 corresponds to one of the first vehicle characteristic change controller and the second vehicle characteristic change controller of the present invention for any one of the six characteristics such as the PWR characteristic, whereas the vehicle operation control unit 201 corresponds to the other one of the first vehicle characteristic change controller and the second vehicle characteristic change controller of the present invention for the SUS characteristic.

The computing section 70 of the display unit 15 is constructed by hardware such as a CPU (Central Processing Unit), a ROM (Read Only Memory), a RAM (Random Access Memory), an ASIC (Application Specific Integrated Circuit) and software such as program data stored in the ROM and the RAM. Based on the software such as the program data, the CPU executes information processings in accordance with the content of an operation received by the setting operation unit 120 or the like. The ASIC controls image display by the display unit 15 based on a result of the information processing. As such, the following functional parts of the computing section.

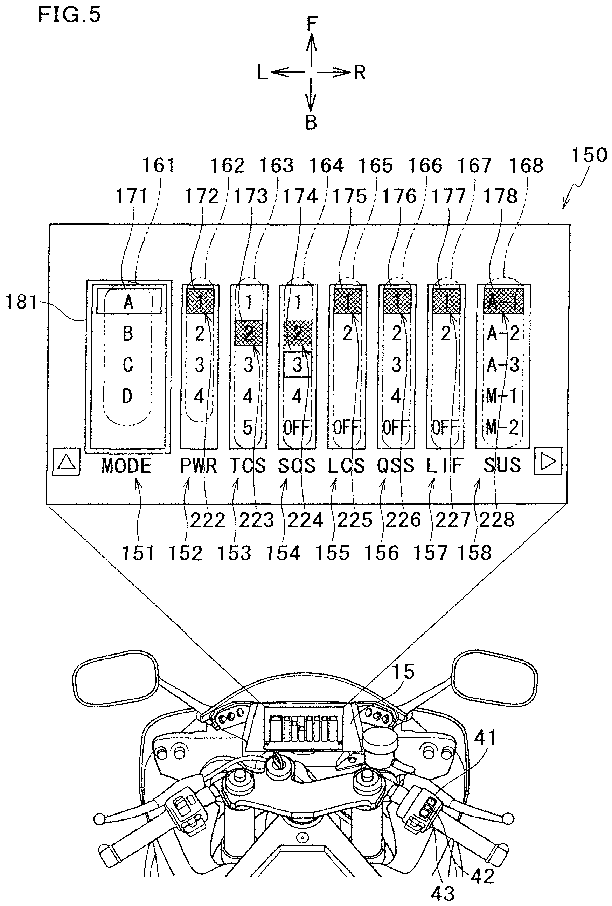

The computing section 70 includes a control unit 71, a related characteristic storage 72, a current selection storage 73, and a in-advance setting storage 74. The related characteristic storage 72 stores one of the characteristic states of the power characteristic, one of the characteristic states of the traction control system characteristic, one of the characteristic states of the slide control system characteristic, one of the characteristic states of the launch control system characteristic, one of the characteristic states of the quick shift system characteristic, and one of the characteristic states of the lift control system characteristic, in association with one another. Regarding the suspension characteristic, the related characteristic storage 72 stores the characteristic states of the four damping force characteristics in association with each of the automatic states 1 to 3 and manual states 1 to 3. For example, according to the setting examples S and T, the level 1 for the power characteristic, the level 2 for the traction control system characteristic, the level 3 for the slide control system characteristic, the level 1 for the launch control system characteristic, the level 1 for the quick shift system characteristic, the level 1 for the lift control system characteristic, and the automatic state 1 for the suspension characteristic are associated with one another as one set of the related characteristic, and these levels are stored in the related characteristic storage 72 (see FIG. 5). In the present embodiment, four sets of the related characteristics, i.e., a related characteristic A, a related characteristic B, a related characteristic C, and a related characteristic D are stored in the related characteristic storage 72.

To these related characteristics, for example, meanings are suitably attached by the rider R based on his/her preference. For example, the attachment of the meanings is done in accordance with the use environments and conditions of the vehicle, such that the related characteristic A is associated with sunny day, the related characteristic B is associated with cloudy day, the related characteristic C is associated with lightly rainy day, and the related characteristic D is associated with heavily rainy day. In the present case, the rider R selects the related characteristic in accordance with the actual use environment and conditions. The current selection storage 73 stores information indicating which one of the related characteristics A to D is currently selected. In accordance with the contents stored in the current selection storages 102 and 202 which are regularly sent from the controllers 100 and 200, the computing section 70 updates the content which is stored in the related characteristic storage 72 in regard to the currently-selected related characteristic stored in the current selection storage 73. Furthermore, the computing section 70 regularly sends, to the controllers 100 and 200, the content stored in the related characteristic storage 72 regarding the currently-selected related characteristic stored in the current selection storage 73. The content having been sent is used for updating the contents stored in the current selection storages 102 and 202 in the controllers 100 and 200. As a result, regarding the related characteristic stored in the current selection storage 73, the characteristic states stored in the related characteristic storage 72 corresponds to the characteristic states stored in the current selection storages 102 and 202 in the controllers 100 and 200.

The in-advance setting storage 74 stores a setting content set in advance for the related characteristics A to D, independently of the related characteristic storage 72. The phrase "a setting content set in advance (hereinafter, in-advance setting content)" indicates a setting content which was set at an arbitrary point in the past. The in-advance setting storage 74 stores, as an in-advance setting content, the characteristic state of each vehicle characteristic in association with each of the related characteristics A to D, in the same manner as the related characteristic storage 72. However, while the content stored in the related characteristic storage 72 is sent to the controllers 100 and 200 as above, the content stored in the in-advance setting storage 74 is not sent to the controllers 100 and 200. In other words, the content stored in the in-advance setting storage 74 is not used in the controllers 100 and 200. The in-advance setting content may be a content that the rider R sets by himself/herself at an arbitrary point in the past. For example, the rider R may be allowed to set the in-advance setting content in some way. For example, the rider R is allowed to import the in-advance setting content from outside. In such a case, the rider R may similarly attach the meanings to the related characteristics A to D in accordance with the use environments and conditions of the vehicle, also for the in-advance setting content. Furthermore, the in-advance setting content may be a setting content at the shipment of the product or may be arranged not to be changeable by the rider R after being set once. The in-advance setting content may be identical with or different from the content stored in the related characteristic storage 72.

The control unit 71 selects one of the characteristic states for each of the power characteristic, the traction control system characteristic, the slide control system characteristic, the launch control system characteristic, the quick shift system characteristic, the lift control system characteristic, and the suspension characteristic, and updates the content stored in the related characteristic storage 72 based on the selected content. The control unit 71 selects a characteristic state for each vehicle characteristic, based on the content that the rider R inputs by operating the setting operation unit 120 while seeing the screen displayed on the display unit 15. Based on this selection content, the content stored in the related characteristic storage 72 is updated. The computing section 70 sends the content stored in the related characteristic storage 72 to the controllers 100 and 200 by the above-described regular sending. In the controller 200, the content stored in the current selection storage 202 is updated irrespective of the content sent from the display unit 15. The updated content is sent to the display unit 15 by the regular sending. Based on this content having been sent, the computing section 70 updates the content stored in the related characteristic storage 72.

Meanwhile, in the controller 100, when the content stored in the related characteristic storage 72 is sent from the display unit 15, the state determination unit 103 again determines whether the characteristic state is changeable. When the state determination unit 103 determines that the characteristic state is changeable, the content stored in the current selection storage 102 of the controller 100 is changed to the content that the computing section 70 has sent to the controller 100. As described above, this changed content is sent from the controller 100 to the display unit 15 in a feedback manner, by the regular sending. The computing section 70 updates the content stored in the related characteristic storage 72 based on the content having been sent in a feedback manner. With this, the state after the change in accordance with the operation of the setting operation unit 120 is reflected to the display unit 15.

Meanwhile, when the state determination unit 103 determines that the characteristic state is not changeable, the content stored in the current selection storage 102 of the controller 100 is not changed. In this case, by the regular sending, the content which is stored in the current selection storage 102 and to which the change is not reflected is sent from the controller 100 to the display unit 15. The computing section 70 updates the content stored in the related characteristic storage 72 based on the content sent from the controller 100. For this reason, even if the content stored in the related characteristic storage 72 is once changed based on the operation of the setting operation unit 120, the content stored in the related characteristic storage 72 returns to the state before the change, based on the content sent from the controller 100.

The following will detail the processing of the control unit 71 based on the content of an operation of the setting operation unit 120. To begin with, the processing content when the basic screen 20 is operated will be described. In a state in which the basic screen 20 is displayed on the display section 60, the control unit 71 performs control to change a characteristic state actually used in the controller 100 or 200 as below, based on the content of an operation of the setting operation unit 120 by the rider R. When the setting operation unit 120 is operated in the state in which the basic screen 20 is displayed on the display section 60 shown in FIG. 2, the control unit 71 determines whether the operation is valid. This determination is made based on the state of the vehicle and/or the rider sent from the controller 100. As described above, in the controller 100, the state determination unit 103 determines whether the characteristic state of a vehicle characteristic is changeable. Also in the control unit 71, whether the operation of the setting operation unit 120 is valid is determined based on the same determination condition as in the state determination unit 103.

For example, in FIG. 2, the related characteristic display 24 is provided with a white frame. This is a state where the related characteristic is selected as an operation target. When the rider R presses the upper switch 41 or the lower switch 43 in this state, the control unit 71 determines whether this operation is valid. As described above, the operation is determined to be valid when the condition based on which a change of the related characteristic is possible, which is identical with the determination condition of the state determination unit 103, is satisfied. Meanwhile, the operation is determined to be invalid when the condition based on which a change of the related characteristic is possible is not satisfied. When the operation is invalid, the control unit 71 does not change the related characteristic. Meanwhile, when the operation is valid, the control unit 71 changes the related characteristic based on the content of the operation of the setting operation unit 120. More specifically, the control unit 71 updates the content stored in the current selection storage 73 to the related characteristic after the change, in accordance with the content of the operation of the setting operation unit 120. As such, among the content stored in the related characteristic storage 72, a characteristic state regarding the related characteristic after the change is sent to the controllers 100 and 200 by the regular sending. The content having been sent is used for updating the contents stored in the current selection storages 102 and 202 in the controllers 100 and 200.

In addition to the above, when the rider R presses the selection switch 42, the control unit 71 moves the white frame from the related characteristic display 24 to serially the characteristic state displays 25a to 25c one by one. When the rider R presses the upper switch 41 or the lower switch 43 while the white frame is at one of the characteristic state displays 25a to 25c, the control unit 71 determines whether this operation is valid. As described above, the operation is determined to be valid when the condition based on which a change of the characteristic state is possible, which is identical with the determination condition of the state determination unit 103, is satisfied. Meanwhile, the operation is determined to be invalid when the condition based on which a change of the characteristic state is possible is not satisfied. When the operation is invalid, the control unit 71 does not change the characteristic state. Meanwhile, when the operation is valid, the control unit 71 changes the characteristic state based on the content of the operation of the setting operation unit 120. More specifically, the control unit 71 updates the content stored in the related characteristic storage 72 to the characteristic state after the change, in accordance with the content of the operation of the setting operation unit 120.

As such, when the setting operation unit 120 is operated on the basic screen 20, the content stored in the related characteristic storage 72 is changed once in accordance with the content of the operation, when it is determined that the operation is valid. However, as described above, in the controller 100 the state determination unit 103 again determines whether the characteristic state is changeable. When it is determined in this determination the characteristic state is changeable, the content after the change is sent from the controller 100 to the display unit 15 in a feedback manner. With this, the content of the related characteristic storage 72 is eventually fixed to the content after the change. Meanwhile, when the state determination unit 103 determines that the characteristic state is not changeable, the content before the change is sent from the controller 100 to the display unit 15. In this case, the content stored in the related characteristic storage 72 eventually returns to the state before the change.

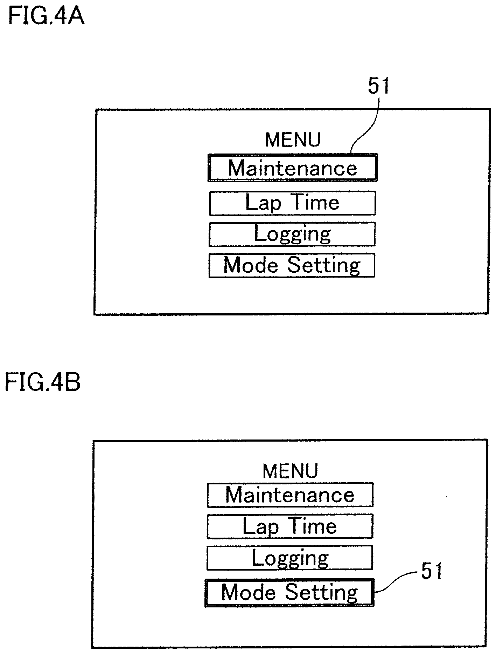

When the vehicle is in the stopped state, if the rider R performs a specific operation with respect to the setting operation unit 120 while the basic screen 20 is being displayed, the control unit 71 switches screen display. It is noted that the control unit 71 determines whether the vehicle is in the stopped state based on the state of the vehicle sent from the controller 100. The control unit 71 then displays a screen shown in FIG. 4A on a display section 60. This screen is a menu screen that allows the rider R to select the setting screen for changing a vehicle characteristic. This menu screen includes menu items including "Mode Setting" for selecting the setting screen for changing a vehicle characteristic. The rider R selects the target "Mode Setting" from the menu items by operating the switch 41 or 43 and moving the cursor 51 as shown in FIG. 4B, and confirms the selection by the switch 42. In response to this, the control unit 71 displays on the display unit 15 a vehicle characteristic screen 150 shown in FIG. 5, based on the content stored in the related characteristic storage 72 and the content stored in the in-advance setting storage 74. It is noted that the two-dot chain lines in FIG. 5 are not lines actually displayed. A switch for switching the basic screen 20 to the menu screen and for operating the menu screen may be provided in addition to the setting operation unit 120.

The vehicle characteristic screen 150 includes a related characteristic icon 151, characteristic icons 152 to 158, a related characteristic icon column 161, characteristic state icon columns 162 to 168, frame displays 171 to 178, and background displays 222 to 228. The control unit 71 causes the display section 60 to display these items based on the content stored in the related characteristic storage 72 and the content stored in the in-advance setting storage 74. The following will describe how the control unit 71 displays the icons, the frame displays, and the background displays on the display surface 15a of the display unit 15. In the present embodiment, icons are stylized simple pictures of objects. There are icons indicating levels or the like by numbers, and icons indicating names by simplified character strings.

The related characteristic icon 151 is an icon showing a text "MODE" indicating the related characteristic. The characteristic icons 152 to 158 are icons indicating the names of the vehicle characteristics by simplified character strings. "PWR" indicates the power characteristic, "TCS" indicates the traction control system characteristic, "SCS" indicates the slide control system characteristic, "LCS" indicates the launch control system characteristic, "QSS" indicates the quick shift system characteristic, "LIF" indicates the lift control system characteristic, and "SUS" indicates the suspension characteristic. Hereinafter, these characteristics may be abbreviated as above. The related characteristic icon 151 and the characteristic icons 152 to 158 are linearly lined up along the left/right direction. The icons may be lined up in a curved manner. For example, the icons are lined up to form a wavy line along the left/right direction. Any two of the characteristic icons 152 to 158 correspond to a first vehicle characteristic icon and a second vehicle characteristic icon of the present invention.

The related characteristic icon column 161 includes four icons "A", "B", "C", and "D" which indicate the related characteristics A to D by simplified character strings. Any two of these four icons correspond to a first related characteristic icon and a second related characteristic icon of the present invention. The characteristic state icon columns 162 to 168 include characteristic state icons each indicating the level of each characteristic by a number. For example, the four icons "1", "2", "3", and "4" in the characteristic state icon column 162 are icons indicating the levels 1 to 4 which are the characteristic states of the PWR characteristic. Each of the characteristic state icon columns 163 to 167 includes an icon "OFF" which indicates the off state which is one of the characteristic states by a simplified character string.

The related characteristic icon column 161 and the characteristic state icon columns 162 to 168 are arranged such that the characteristic state icons in each column are linearly lined up in the forward/rearward direction. The characteristic state icons included in the related characteristic icon column 161 are linearly lined up in the forward/rearward direction together with the related characteristic icon 151. The characteristic state icons included in the characteristic state icon column 162 are linearly lined up in the forward/rearward direction together with the characteristic icon 152. Similarly, in the characteristic state icon columns 163 to 168, the characteristic state icons in each icon column are linearly lined up in the forward/rearward direction together with each of the characteristic icons 153 to 158. It is noted that the icons may be lined up in a curved manner. For example, the icons may be lined up to form a wavy line along the forward/rearward direction. In each icon column, five icons at the maximum are displayed at regular intervals within a single screen. The icon columns are identical in length in the forward/rearward direction and are provided at the same positions in the forward/rearward direction. The distance between neighboring icons in the forward/rearward direction is identical among the icon columns.

In the related characteristic icon column 161, the icon "A" is on the forwardmost, and the other icons "B", "C", and "D" are provided rearward of the icon "A" in this order. Among the characteristic state icon columns 162 to 168, in the characteristic state icon columns 162 and 164 to 167, the icons "1" each of which indicates the lowest level are provided at the same forwardmost positions in the forward/rearward direction. The icons indicating the other levels are provided rearward of the icons "1" in the order of "2", "3", and so on. The icon "OFF" is provided at the position equivalent to the fifth icon from the forwardmost icon. Among the icon columns, in an icon column in which the number of the levels is less than five (e.g., the characteristic state icon column 165), a blank space is formed between an icon indicating a level and the icon "OFF".

Among the characteristic state icon columns 162 to 168, the characteristic state icon column 163 includes icons "1" to "9" indicating the levels and the icon "OFF" indicating the off state, and therefore the entirety of the column cannot be displayed in one screen. In the example shown in FIG. 5, the forwardmost icon "1" is provided at the same position as the icons "1" of the other icon columns in the forward/rearward direction, and the icons "2" to "5" are lined up rearward of the icon "1" in the forward/rearward direction. Meanwhile, because the maximum number of icons displayable in one screen is five, the icons "6" to "9" and the icon "OFF" are not displayed in this state. For this reason, the image display may be switched to display the icon "6" and the icon "OFF" (as described later). The characteristic state icon column 168 includes icons "A-1" to "A-3" indicating the automatic states and icons "M-1" to "M-3" indicating the manual states. In the same manner as the characteristic state icon column 163, the entirety of the characteristic state icon column 168 cannot be displayed in one screen. In the example shown in FIG. 5, the forwardmost icon "A-1" is provided at the same position as the icons "1" of the other icon columns in the forward/rearward direction, and the icons "A-2" to "M-2" are lined up rearward of the icon "A-1" in the forward/rearward direction. The icon "M-3", however, is not displayed. For this reason, the image display may be switched to display the icon "6" and the icon "OFF" (as described later).

The icons included in the related characteristic icon column 161 and the icons included in the respective characteristic state icon columns 162 to 168 are linearly lined up along the left/right direction. For example, in the state shown in FIG. 5, the icon "A" in the related characteristic icon column 161 and the icons "1" and "A-1" in the characteristic state icon columns 162 to 168 are linearly lined up in the left/right direction. The icon "B" in the related characteristic icon column 161 and the icons "2" and "A-2" in the characteristic state icon columns 162 to 168 are linearly lined up in the left/right direction. Furthermore, in the characteristic state icon columns 162 to 168, the characteristic state icons in the respective icon columns are linearly lined up in the left/right direction, too. For example, in the state shown in FIG. 5, the icons "1" and "A-1" in the characteristic state icon columns 162 to 168 are linearly lined up in the left/right direction. Furthermore, the icons "2" and "A-2" in the characteristic state icon columns 162 to 168 are linearly lined up in the left/right direction. It is noted that the icons may be lined up in a curved manner in the left/right direction. For example, the icons may be lined up to form a wavy line along the left/right direction.

The frame display 171 indicates which one of the related characteristics is currently selected as an operation target. In the screen shown in FIG. 5, the frame display 171 is displayed at a position surrounding the icon "A" in the related characteristic icon column 161. This indicates that the related characteristic currently selected as the operation target is the related characteristic A. That is to say, the aspect of the icon "A" where the frame display 171 is provided is different from the aspects of the icons "B" to "D" where the frame display 171 is not provided. As such, the related characteristic currently selected as the operation target is displayed as the related characteristic A.

The frame displays 172 to 178 display which characteristic states are associated with the related characteristic currently selected as the operation target. More specifically, for the respective characteristics, the frame displays 172 to 178 are provided to each surround one of the characteristic state icons. That is to say, the aspects of the characteristic state icons where the frame displays 172 to 178 are provided are different from the aspect of a characteristic state icon where no frame display is provided. As such, which characteristic state is associated with the related characteristic selected as the operation target for each characteristic is displayed.

For example, in the example shown in FIG. 5, the frame display 172 causes the icon "1" in the PWR characteristic to be in a display aspect different from those of the other characteristic state icons. Furthermore, the frame display 173 causes the icon "2" in the TCS characteristic to be in a display aspect different from those of the other characteristic state icons. As such, these frame displays display that the level 1 is associated with the related characteristic A in the PWR characteristic and the level 2 is associated with the related characteristic A in the TCS characteristic.

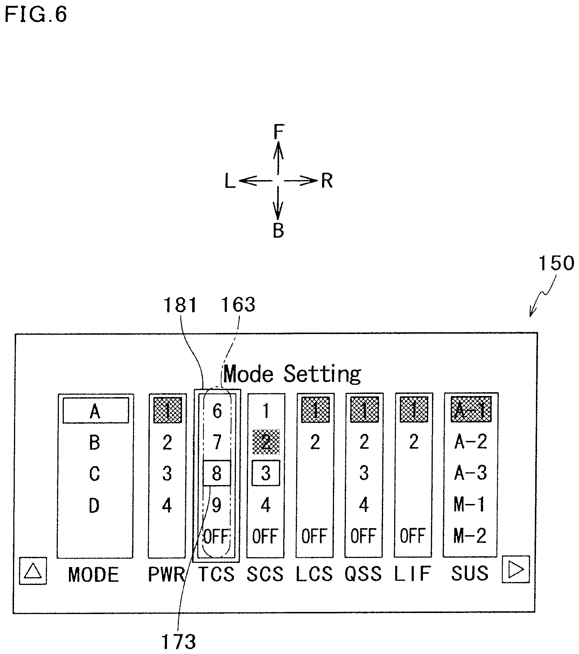

When one of the icons "6" to "9" and the icon "OFF" is displayed as the characteristic state in the TCS characteristic, the frame display 173 is displayed after the aspect of the characteristic state icon column 163 is changed to an aspect different from the state in FIG. 5 in which the icons "1" to "5" are displayed. For example, the aspect of the characteristic state icon column 163 is switched to the state in which the icons "6" to "9" and the icon "OFF" are displayed as shown in FIG. 6, and the frame display 173 is provided at the icon "8". The same applies to the characteristic state icon column 168.

For the respective characteristics, the background displays 222 to 228 indicate the characteristic states corresponding to the in-advance setting content, i.e., the characteristic states stored in the in-advance setting storage 74 in association with the related characteristic currently selected as the operation target (i.e., the related characteristic where the frame display 171 is provided). As shown in FIG. 5, for each characteristic, each of the background displays 222 to 228 changes the background color of the characteristic state icon corresponding to the in-advance setting content to be different from the background color of the other characteristic state icons. With this, when the characteristic state stored in the related characteristic storage 72 in association with the related characteristic currently selected as the operation target (i.e., the currently-selected characteristic states) is different from the characteristic state corresponding to the in-advance setting content, the aspect of the characteristic state icon corresponding to the in-advance setting content becomes a state different from both the aspect of the characteristic state icon corresponding to the currently-selected characteristic state and those of the other characteristic state icons. Furthermore, in each vehicle characteristic, when the characteristic state stored in the related characteristic storage 72 in association with the related characteristic currently selected as the operation target is identical with the characteristic state corresponding to the in-advance setting content, both of the frame display and the background display are provided at the characteristic state icon corresponding to that characteristic state.

For example, in FIG. 5, in the SCS characteristic, while the background display 224 is provided at the icon "2", the frame display 174 is provided at the icon "3". This indicates that, for the SCS characteristic, the characteristic state stored in the related characteristic storage 72 in association with the related characteristic A is different from the characteristic state in the corresponding in-advance setting content. As shown in FIG. 5, the icon "2" where the background display 224 is provided has a background color different from those of all of the other icons and is provided with no frame display. As such, the display aspect of the icon "2" is different from the display aspects of the icon "3" where the frame display 174 is provided and of the other characteristic state icons. Meanwhile, in the characteristics other than the SCS characteristic, the frame displays 172, 173, and 175 to 178 and the background displays 222, 223, and 225 to 228 are provided at the same characteristic state icons. This indicates that, for the characteristics other than the SCS characteristic, the characteristic states stored in the related characteristic storage 72 in association with the related characteristic A are identical with the characteristic states in the corresponding in-advance setting content.

Regarding the TCS characteristic, the characteristic state icon in the corresponding to the in-advance setting content may not be displayed. For example, when the characteristic state stored in the related characteristic storage 72 in association with the related characteristic A is one of the levels 6 to 9 and the off state and the characteristic state in the corresponding in-advance setting content is one of the levels 1 to 5, as shown in FIG. 6, only the frame display 173 is displayed in the screen and the background display 223 is not displayed in the screen. The same applies to the SUS characteristic.

As shown in FIG. 5, the control unit 71 displays the cursor 181 in the vehicle characteristic screen 150. This allows the rider R to move this cursor 181 by operating the setting operation unit 120. With this, the rider R selects an item as a target of change. When the screen display of the display unit 15 is switched from the basic screen 20 to the vehicle characteristic screen 150, the control unit 71 first provides the cursor 181 to a position surrounding the related characteristic icon column 161 (i.e., at the position shown in FIG. 5).

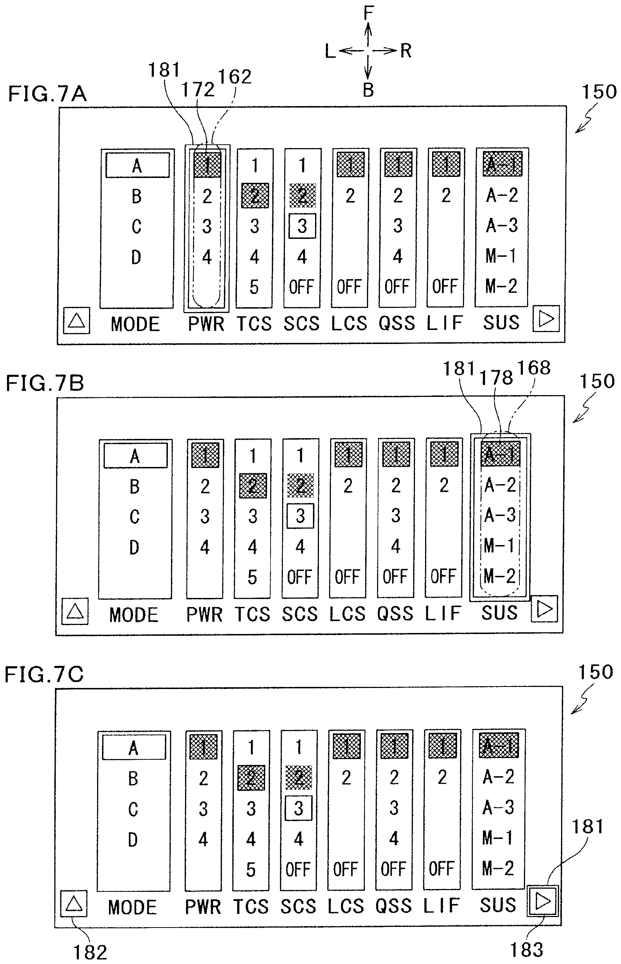

As the rider R presses the switch 43 once in the state shown in FIG. 5, the control unit 71 moves the cursor 181 to a position surrounding the characteristic state icon column 162 to the right of the related characteristic icon column 161, as shown in FIG. 7A. As such, each time the switch 43 is pressed once, the control unit 71 moves the cursor 181 to the characteristic state icon column to the immediate right.

Furthermore, when the cursor 181 is at the characteristic state icon column 168 as shown in FIG. 7B, as the switch 43 is pressed once, the control unit 71 moves the cursor 181 to a rightward arrow display 183 as shown in FIG. 7C. As the rider R continues to press the switch 41, the cursor 181 moves in the direction opposite to the case of the pressing of the switch 43. It is noted that, when the switch 43 is further pressed once while the cursor 181 is at the rightward arrow display 183, the control unit 71 may move the cursor 181 to an upward arrow display 182. In short, the cursor 181 may be arranged to move in a circulating manner.

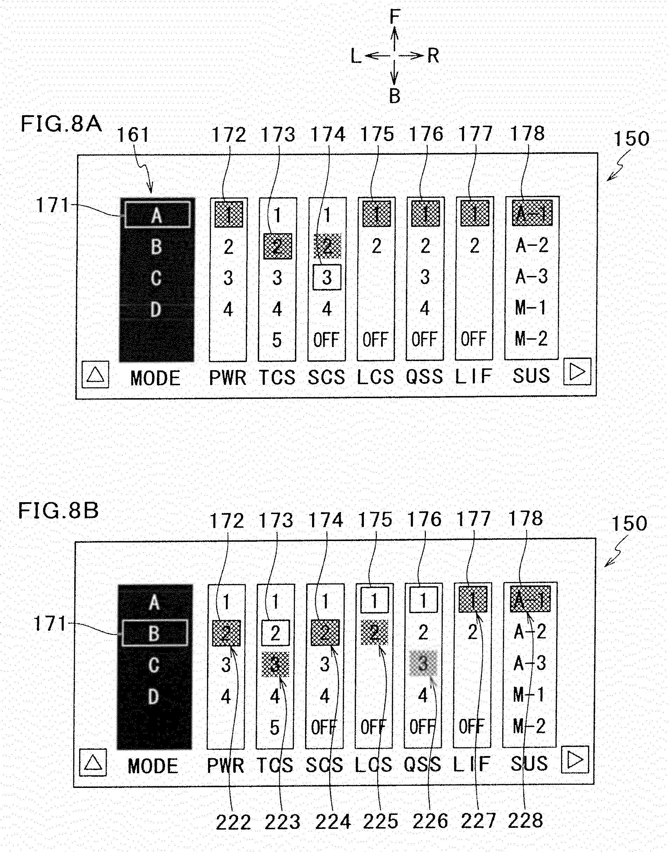

When the rider R presses the switch 42 while the cursor 181 is at the related characteristic icon column 161, the control unit 71 inverts the black and white of the related characteristic icon column 161, the background thereof, and the frame display 171, as shown in FIG. 8A. This state is a state in which one of the related characteristics A to D is selectable. In this state, the frame display 171 is movable from the currently-selected related characteristic as described below. For example, each time the rider R presses the switch 43 once, the control unit 71 moves the frame display 171 rearward by one level. Meanwhile, when the rider R presses the switch 41, the control unit 71 moves the frame display 171 in the opposite direction (i.e., forward) as compared to the case of the pressing of the switch 43. In this regard, the control unit 71 moves the frame displays 172 to 178 to the characteristic state icons corresponding to the characteristic states associated with the related characteristic where the frame display 171 is provided, in accordance with the content stored in the related characteristic storage 72. Furthermore, based on the content stored in the in-advance setting storage 74, the control unit 71 moves the background displays 222 to 228 to the characteristic state icons corresponding to the in-advance setting content associated with the related characteristic where the frame display 171 is provided.

As an example, FIG. 8B shows a state in which the frame display 171 has been moved to the "B" which is rearward of the "A" icon by one level. As a result, the control unit 71 moves the frame displays 172 to 178 from the positions corresponding to the related characteristic A to the positions corresponding to the related characteristic B. Furthermore, the control unit 71 moves the background displays 222 to 228 from the positions corresponding to the related characteristic A to the positions corresponding to the related characteristic B.

When the rider R presses the switch 42 in the state shown in FIG. 8A or FIG. 8B, the control unit 71 returns the inversed black and white of the background of the related characteristic icon column 161 or the like to the original ones. Simultaneously, the related characteristic corresponding to the position of the frame display 171 is selected as the operation target. On this account, the content stored in the current selection storage 73 is not changed even if the related characteristic selected as the operation target is changed. As such, the related characteristic which is the target of operation on the vehicle characteristic screen 150 may or may not be identical with the content stored in the current selection storage 73.

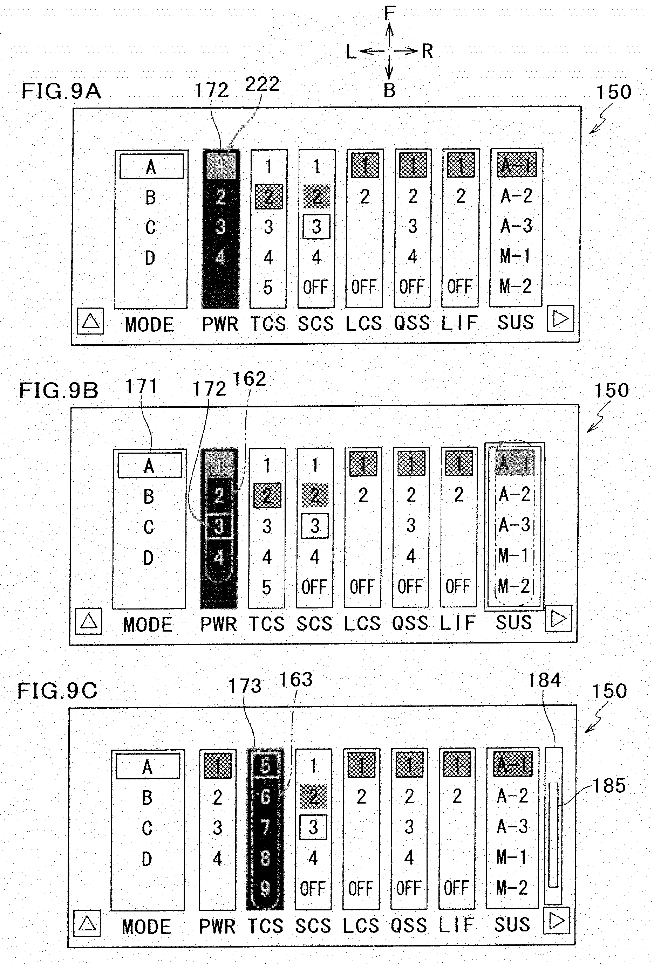

Now, operations of the setting operation unit 120 and the content of control by the control unit 71 when the PWR characteristic, the TCS characteristic or the like is changed on the vehicle characteristic screen 150 will be described. For example, as shown in FIG. 7A, when the rider R presses the switch 42 while the cursor 181 is at the PWR characteristic in the left/right direction, the control unit 71 inverts the black and white of the characteristic state icon column 162, the background thereof, and the frame display 172, as shown in FIG. 9A. Meanwhile, the control unit 71 does not change the background display 222. This state is a state in which one of the characteristic states is selectable for the PWR characteristic. It is noted that the display aspect of the background display 222, e.g., the color thereof, may be changed.

When the rider R presses the switch 41 or the switch 43 in this state, the control unit 71 moves the frame display 172 in the forward/rearward direction in accordance with the content of the operation of the switch 41 or 43. For example, FIG. 9B shows a state in which the frame display 172 has been moved rearward by two levels as compared to the state shown in FIG. 9A. At this time, the background display 222 is not moved. As such, the position of the frame display 172 after the movement in the characteristic state icon column 162 is clearly shown with respect to the background display 222.

When the rider R presses the switch 42, the control unit 71 returns the black and white of background of the characteristic state icon column 162 or the like to the original ones. Simultaneously, the control unit 71 updates the characteristic state stored in the related characteristic storage 72 in association with the related characteristic indicated by the frame display 171 to the characteristic state indicated by the frame display 172. For example, in the state shown in FIG. 9B, the frame display 171 is at the icon "A" whereas the frame display 172 is at the icon "3". Therefore, when the switch 42 is pressed in this state, the related characteristic storage 72 stores the level 3 as the characteristic state of the PWR characteristic, in association with the related characteristic A.

The operation of the setting operation unit 120 and the content of control by the control unit 71 when the characteristic state is changed for a characteristic other than the PWR characteristic are not described here because they are basically identical with those in the case of the PWR characteristic already described above. Meanwhile, the TCS characteristic and the SUS characteristic will be described below because the operations and the content of control are partially different from the above. As described above, in the TCS characteristic, it is not possible to display the characteristic state icons in one screen. For this reason, the state shown in FIG. 5 and the state shown in FIG. 6 are switched therebetween. For example, when the switch 42 is pressed in the state of FIG. 6, the black and white of the characteristic state icon column 163, the background thereof, and the frame display 173 are inversed from the state shown in FIG. 6. When the switch 41 or 43 is pressed in this state, the frame display 173 moves in the forward/rearward direction. When the switch 41 is pressed while the frame display 173 is provided at the forwardmost icon (the icon "6" in FIG. 6), the image display of the characteristic state icon column 163 is scrolled rearward by one step as shown in FIG. 9C. On the contrary, when the switch 43 is pressed while the frame display 173 is provided at the rearmost icon, the image display of the characteristic state icon column 163 is scrolled by one step forward when it is possible to display an icon on the rear side. As such, the state of FIG. 5 and the state of FIG. 6 are switched by scrolling the display content forward or rearward.

It is noted that, to indicate that the display content can be scrolled forward or rearward as described above, a scroll bar is displayed in the vehicle characteristic screen 150. For example, in FIG. 9C, a frame 184 indicating the entire range of the scroll and a bar 185 indicating the current display range within the entire range of the scroll by the length and position in the forward/rearward direction of the bar with respect to the frame 184 are displayed. The frame 184 and the bar 185 are displayed only when the characteristic state of a characteristic in which the display content is scrollable, e.g., the TCS characteristic and the SUS characteristic of the present embodiment, is changed.

Also in regard to the SUS characteristic, the icons "A-1" to "A-3" and "M-1" to "M-3" are scrollable when the characteristic state is changed. This arrangement will not be described because it is identical with the arrangement in case of the TCS characteristic. In addition to the above, the SUS characteristic is provided with four damping force characteristics as described above. These four damping force characteristics are changeable in regard to each of the automatic states 1 to 3 and manual states 1 to 3, as described later.

As described above, when the content stored in the related characteristic storage 72 is changed once in accordance with the content of an operation of the setting operation unit 120 on the vehicle characteristic screen 150, the content of the change is sent to the controllers 100 and 200 by the regular sending. In the controller 200, the content stored in the current selection storage 202 is updated based on the content sent from the display unit 15 by the regular sending. The updated content is sent to the display unit 15 by the regular sending, in a feedback manner. As a result, the content stored in the related characteristic storage 72 is fixed to the content after the change.

Meanwhile, in the controller 100, the state determination unit 103 again determines whether the characteristic state is changeable as described above. When it is determined that the characteristic state is changeable in this determination, the content after the change is sent from the controller 100 to the display unit 15 in a feedback manner. With this, the content stored in the related characteristic storage 72 is finally fixed to the content after the change. Meanwhile, when it is determined by the state determination unit 103 that the characteristic state is not changeable, the content before the change is sent from the controller 100 to the display unit 15. In this case, the content stored in the related characteristic storage 72 eventually returns to the state before the change.

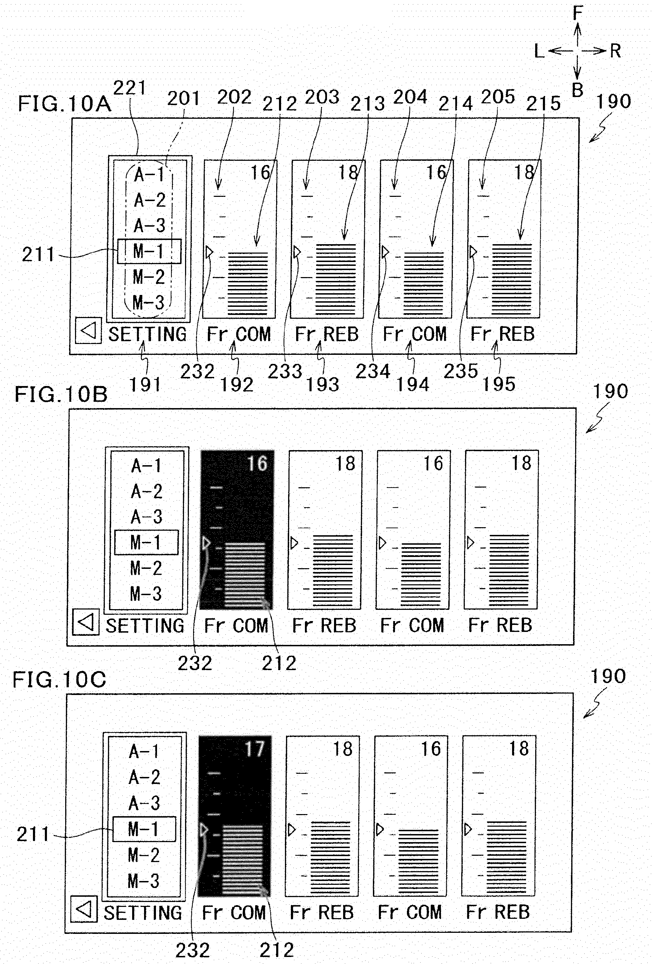

When the rider R presses the switch 42 in the state shown in FIG. 7C in which the cursor 181 is provided at the rightward arrow display 183, the control unit 71 displays a SUS characteristic screen 190 shown in FIG. 10A on the display unit 15. The SUS characteristic screen 190 shows the characteristic states regarding the four damping force characteristics of the SUS characteristic. It is noted that the two-dot chain lines in FIG. 10 are not actually displayed.

The SUS characteristic screen 190 includes a SUS characteristic icon 191, damping force characteristic icons 192 to 194, a SUS state icon column 201, scale displays 202 to 205, a frame display 211, level bar displays 212 to 215, and level indication displays 232 to 235. The following will describe how these icons or the like are displayed.

The SUS characteristic icon 191 is an icon showing a text "SETTING" which indicates that the setting relates to the SUS characteristic. The damping force characteristic icons 192 to 194 are icons indicating the names of the four damping force characteristics by simplified character strings. "Fr COM" indicates the compression side of the front-side shock absorber, "Fr REB" indicates the rebound side of the front-side shock absorber, "Rr COM" indicates the compression side of the rear-side shock absorber, and "Rr REB" indicates the rebound side of the rear-side shock absorber, each in a simplified manner. These icons are linearly lined up in the left/right direction. The icons may be lined up in a curved manner. For example, the icons are lined up to form a wavy line along the left/right direction.

The SUS state icon column 201 includes icons "A-1" to "A-3" and "M-1" to "M-3" which correspond to the automatic states 1 to 3 and the manual states 1 to 3, respectively. These icons are linearly lined up in the forward/rearward direction. The icons may be lined up in a curved manner. For example, the icons are lined up to form a wavy line along the forward/rearward direction. The frame display 211 is provided at an icon corresponding to the currently-selected automatic state or manual state, among the icons "A-1" to "A-3" and "M-1" to "M-3". In the example of FIG. 10, the manual state 1 corresponding to the icon "M-1" is selected.

The scale displays 202 to 205 include scales each of which indicates the characteristic state of a damping force characteristic. The graduations are provided at regular intervals in the forward/rearward direction, and are marked every five levels from the reference position P shown in FIG. 10A which indicates the minimum level.

Each of the level bar displays 212 to 215 indicates the level of a damping force characteristic associated with the currently-selected automatic state or manual state. More specifically, each of the level bar displays 212 to 215 linearly extends forward from the reference position P to have a length corresponding to the level of each damping force characteristic. The level bar displays 212 to 215 are provided to the immediate right of the scale displays 202 to 205, respectively. The front end of each level bar display is provided at a position corresponding to the level of each damping force characteristic with respect to each of the scale displays 202 to 205. Between the automatic states 1 to 3 and the manual states 1 to 3, the adjustable range of the levels and the number of the levels may be different.

In addition to the level bar displays 212 to 215, the currently-selected characteristic state may be displayed. In the example shown in FIG. 10A, numbers such as "16", "18", "16", and "18" indicating the levels selected in the respective damping force characteristics are displayed forward of the level bar displays 212 to 215.

The level indication displays 232 to 235 indicate the characteristic states of the respective damping force characteristics corresponding to the in-advance setting content, i.e., the characteristic states of the respective damping force characteristics which are stored in the in-advance setting storage 74 in association with the automatic state or manual state which is currently selected as the operation target. More specifically, the level indication displays 232 to 235 are provided to the immediate left of the scale displays 202 to 205, respectively, and a right-pointing triangular icon indicates a particular position of each of the scale displays 202 to 205. This position indicates the level corresponding to the in-advance setting content.

The SUS characteristic screen 190 includes a cursor 221. By operating the setting operation unit 120, the rider R is able to move this cursor 221. Using the cursor 221, the rider R selects an item as the target of change. In so doing, each time the switch 41 or 43 is operated, the cursor 221 moves right or left by one stage, and is positioned to surround one of the SUS state icon column 201 and the level bar displays 212 to 215. For example, in FIG. 10A, the cursor 221 is provided to surround the SUS state icon column 201. When the rider R presses the switch 42 while the cursor 221 is provided to surround one of the SUS state icon column 201 and the level bar displays 212 to 215, the control unit 71 inverts the black and white of the area surrounded by the cursor 221. With this, the automatic state, the manual state, or the damping force characteristic corresponding to the area becomes changeable.

The content of the operation for changing the automatic state or the manual state, the changes in the display content in response to the operation, and the content of the processing by the control unit 71 are identical with those in the above-described case of changing the related characteristics A to D, the PWR characteristic, or the like. Therefore they will not be detailed here. It is noted that, when one of the automatic states 1 to 3 and the manual states 1 to 3 is changed, the level bar displays 212 to 215 and the level indication displays 232 to 235 are immediately changed in accordance with the characteristic states associated with the state after the change. Meanwhile, the scale displays 202 to 205, the damping force characteristic icons 192 to 195, or the like, which are different from the level bar displays 212 to 215 and the level indication displays 232 to 235, are not changed. This allows the rider R to instantly recognize differences in characteristics between the states, by comparing the automatic states 1 to 3 or the manual states 1 to 3 with one another in terms of the entire shape of the level bar displays 212 to 215.

The following will describe an example of an operation to change each damping force characteristic and control by the control unit 71. FIG. 10B shows a state in which, among the four damping force characteristics, the damping force characteristic of the compression side of the front-side shock absorber is changeable. In this state, each time the rider R presses the switch 41 once, the control unit 71 updates the image display and the numerical display of the level bar display 212 such that the level which is higher than the currently-selected level by one is indicated. At this time, the level indication display 232 is not changed. For this reason, to what extent the level bar display 212 has been changed is visually clarified in comparison with the level indication display 232. FIG. 10C shows a state in which the level 17 which is higher than the level 16 in FIG. 10B by one is displayed. Meanwhile, when the rider R presses the switch 43, on the contrary to the case of the switch 41, the control unit 71 updates the image display such that the level which is lower than the currently-selected level by one is indicated.

Thereafter, when the rider R presses the switch 42, the control unit 71 returns the inverted state to the original state. At the same time, the control unit 71 updates the characteristic states stored in the related characteristic storage 72 in association with the automatic state or the manual state indicated by the frame display 211 to the characteristic states indicated by the level bar displays 212 to 215. For example, when the switch 42 is pressed in the state of FIG. 10C, the characteristic state of the damping force characteristic on the compression side of the front-side shock absorber, which is stored in the related characteristic storage 72 in association with the manual state 1, is updated to 17.

As described above, once the content stored in the related characteristic storage 72 is changed in accordance with the content of the operation of the setting operation unit 120 on the SUS characteristic screen 190, the content of the change is sent to the controller 200 by the regular sending. In the controller 200, the content stored in the current selection storage 202 is updated based on the content sent from the display unit 15 by the regular sending. The updated content is sent to the display unit 15 by the regular sending, in a feedback manner. With this, the content stored in the related characteristic storage 72 is fixed to the content after the change.

In the present embodiment described above, the rider R is able to suitably adjust the vehicle characteristics in consideration of the position of the characteristic state of each characteristic, even if the rider does not remember the content previously set. The reason of this will be described below. In the present embodiment, in the vehicle characteristic screen 150, the background displays 222 to 228 are displayed together with the frame displays 172 to 178. With this, the characteristic state icon of the currently-selected characteristic state and the characteristic state icon of the characteristic state set in advance are in different display aspects which are both different from the display aspects of the icons of the other characteristic states. With this, it is possible to change a vehicle characteristic in consideration of the position of the currently-selected characteristic states (indicated by the frame displays 172 to 178) with respect to the characteristic states set in advance (indicated by the background displays 222 to 228).

In addition to the above, the characteristic icons 152 to 158 and the characteristic state icon columns 162 to 168 are linearly lined up, and the aspects thereof are differentiated. This makes it possible to recognize the positional relations of the icons on the line, for both the characteristic states which are set in advance and the characteristic states which are currently selected. With this, it is possible to recognize the contents of the characteristic states from the positional relations of the icons, without directly reading the contents of the icons from the icons.

In addition to the above, the display unit 15 is provided between the grip 5c and the grip 5d. The rider R sitting on the seat 11 and gripping the grips 5c and 5d therefore looks down the screen of the display unit 15 from above. In this state, the forward/rearward direction is perceived by the rider R as the direction along the central axis of his/her body. Meanwhile, the left/right direction is perceived as the direction connecting the grip 5c and the grip 5d with each other, i.e., the direction connecting the positions where the respective hands hold the grips with each other. In this state, on the display surface 15a of the display unit 15, for example, the characteristic icon 152 and the characteristic state icons included in the characteristic state icon column 162 are lined up in the forward/rearward direction. For this reason, for the rider R sitting on the seat 11 and gripping the grips 5c and 5d, the direction in which the icons are lined up is either the direction corresponding to the central axis of the body or the direction connecting the positions where the respective hands hold the grips with each other, which intersects with the central axis of the body. As such, for the rider R sitting on the seat 11 and gripping the grips 5c and 5d, the icons are lined up in one of the two directions that refer to the posture of the rider R. Because this makes it easy to correctly recognize the layout of the icons, it is possible to correctly recognize the setting states of the vehicle characteristics, which are indicated by the layout of the icons. It is therefore possible to properly recognize both the characteristic states set in advance and the characteristic states which are currently selected.

Because of the above, the rider R is able to properly adjust the vehicle characteristics in consideration of the position of the characteristic state of each characteristic, even if he/she does not remember the contents previously set.

In addition to the above, in the present embodiment, while the characteristic icons 152 to 158 are displayed to be lined up in the left/right direction for the vehicle characteristics such as the PWR characteristic, characteristic state icons are, for these characteristics, displayed to be lined up in the forward/rearward direction as the characteristic state icon columns 162 to 168. Across the characteristic state icon columns 162 to 168, the characteristic state icons are displayed to be lined up in the left/right direction. For this reason, in regard to the position of the characteristic state of a particular characteristic, it is possible to take into account of the relative position with respect to the characteristic states of the other characteristics. Furthermore, because the background displays 222 to 228 are provided for these characteristics, it is possible to take into account of the position of the characteristic state which is currently selected for a characteristic (i.e., where the frame display is provided), with respect to the in-advance setting contents of plural vehicle characteristics. Furthermore, the icons are lined up in both of the direction corresponding to the central axis of the body (forward/rearward direction) and the direction connecting the positions where the respective hands hold the grips with each other (left/right direction), for the rider sitting on the seat 11 and gripping the grips. The icons are therefore lined up in two directions that refer to the posture of the rider R for the rider R sitting on the seat 11 and gripping the grips 5c and 5d, and hence the rider R is likely to correctly recognize the layout of the icons. Because both the characteristic states set in advance and the characteristic states currently selected are properly recognized, the vehicle characteristics are more properly adjusted.

In addition to the above, because the characteristic states associated with the related characteristics A to D are changeable for the respective vehicle characteristics, it is possible to, for example, finely adjust the vehicle characteristics in accordance with small situational differences, when the use environments of the vehicle are assigned to the respective related characteristics. Furthermore, the related characteristic icon 151 and the related characteristic icon column 162 are provided to be lined up in the forward/rearward direction. The related characteristic icon 151 and the characteristic icons 152 to 168 are provided to be lined up in the left/right direction, and the icons in the related characteristic icon column 162 and the characteristic state icons in the characteristic state icon columns 162 to 168 are lined up in the left/right direction . This makes it easy to recognize the relationship between the related characteristic and the characteristic state of each vehicle characteristic, with reference to the positional relations of the icons. Furthermore, for the rider sitting on the seat 11 and gripping the grips 5c and 5d, the layout of the icons including the icons regarding the related characteristic is correctly recognizable.

Provided that only the frame displays 172 to 178 are provided and the background displays 222 to 228 are not provided, the rider R is required to change the current setting content by making a comparison with the in-advance setting content based on his/her memory. When he or she does not remember the in-advance setting content, after repeating the adjustment of the setting content over and over again, the rider may no longer recognize the position of the current setting of each related characteristic. In such a case, the rider may be at a loss in what manner to change the setting. In this regard, in the present embodiment, it is possible to change a vehicle characteristic while recognizing how the current characteristic states indicated by the frame displays 172 to 178 are positioned with respect to the in-advance setting content of each related characteristic, with reference to the positional relations with the background displays 222 to 228. This makes it possible to properly adjust a vehicle characteristic in consideration of the position of the characteristic state in the related characteristic, even if the rider R does not remember the in-advance setting content.

Furthermore, as described above, when the image display of the vehicle characteristic screen 150 starts, the cursor 181 is provided on the related characteristic icon column 161. With this, the number of times of operating the setting operation unit 120 until the related characteristic icon column 161 is selected and the related characteristic becomes changeable is smaller than the number of times of operating the setting operation unit 120 until the cursor 181 is moved to the characteristic state icon columns 162 to 168 and the characteristics such as the power characteristic become changeable. As such, the state of changing the related characteristic is easily realized. When the related characteristic is changed, the characteristic states set in advance for another related characteristic can be referred to. Therefore, when the state of changing the related characteristic is easily achieved, it is easy to take into account of the position of the characteristic states of another related characteristic, and hence the vehicle characteristics are more properly adjusted.

Furthermore, as described above, it is possible to change the related characteristic and the vehicle characteristics while keeping the related characteristic icon 151, the related characteristic icon column 161, the characteristic icons 152 to 158, and the characteristic state icon columns 162 to 168 to be displayed in one vehicle characteristic screen 150. It is therefore possible to properly adjust the vehicle characteristics with reference to the characteristic states set in advance, as compared to a case where the vehicle characteristics are changeable only after the shifting to another screen.

Furthermore, as described above, the characteristic icons 152 to 158 are lined up in the left/right direction whereas the characteristic state icons in the characteristic state icon columns 162 to 168 are lined up in the forward/rearward direction. In this connection, the display surface 15a of the display unit 15 is long in the left/right direction. Therefore the range of the display surface 15a is wide in the direction in which the characteristic icons 152 to 158 are lined up, as compared to the range in the direction in which the characteristic state icons are lined up. It is therefore easy to provide the characteristic icons 152 to 158 in one screen. Because this makes it less necessary to perform an operation after the shift to another screen, it is possible to properly adjust the vehicle characteristics with reference to the characteristic states set in advance.

### [Modifications]

The preferred embodiment of the present invention has been described as above. The present invention, however, is not limited to the embodiment above and may be variously altered within the scope of the claims. Furthermore, below-described modfications can be suitably combined with one another and implemented. It is noted that the term "preferable" is non-exclusive in the present specification and indicates "preferable but not limited to".

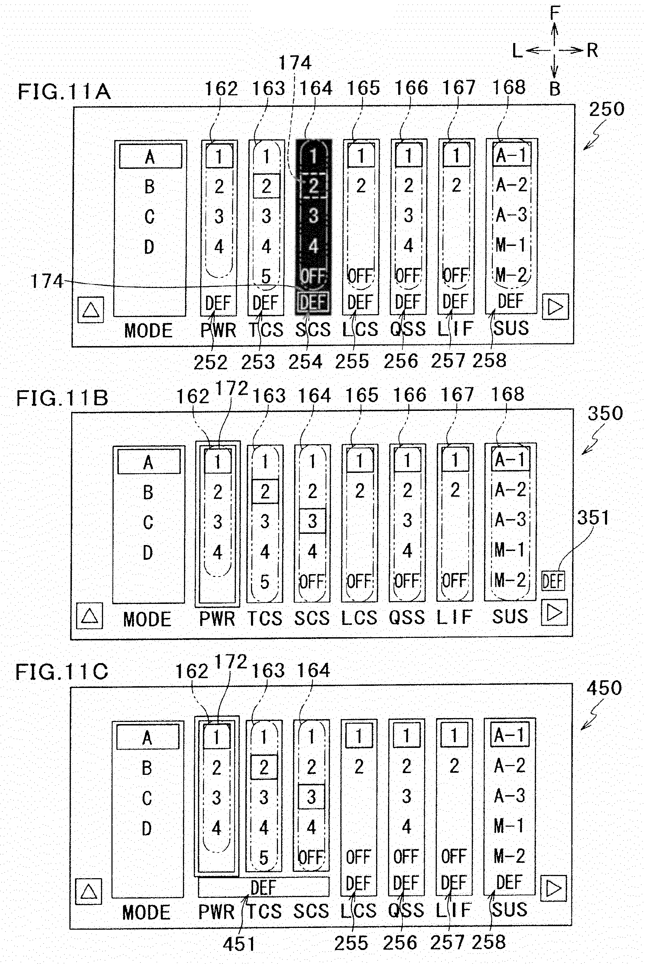

The following will describe modifications of the embodiment above. In the embodiment above, the background displays 222 to 228 are used for displaying the in-advance setting content. Alternatively, the in-advance setting content may be displayed by a different method. FIG. 11A shows a vehicle characteristic screen 250 regarding this modification. In regard to the vehicle characteristic screen 250, the elements identical with those of the vehicle characteristic screen 150 will be denoted by the same reference numerals as those of the vehicle characteristic screen 150 and the descriptions thereof will not be repeated. The vehicle characteristic screen 250 includes "DEF" icons 252 to 258 in place of the background displays 222 to 228. The "DEF" icons 252 to 258 are provided immediately rearward of the characteristic state icon columns 162 to 168. The "DEF" icons 252 to 258 become selectable in response to an operation of the setting operation unit 120, when the characteristic state icons become selectable in the respective characteristics.

FIG. 11A shows, as an example, a state in which the characteristic state icon becomes selectable in the characteristic state icon column 164. In this state, when the rider R presses the switch 43 once while the frame display 174 is at the rearmost icon "OFF", the frame display 174 moves to the "DEF" icon as shown in FIG. 11A. When the rider R presses the switch 42 in this state, the frame display 174 moves to the characteristic state icon (at the position indicated by the dotted line in FIG. 11A, for example) corresponding to the characteristic state of the SCS characteristic stored in the in-advance setting storage 74 in association with the related characteristic A. This allows the rider R to recognize that the icon "2" indicated by the frame display 174 after the movement is the in-advance setting content of the SCS characteristic associated with the related characteristic A.

FIG. 11B shows a modification in which the position where the "DEF" icon is displayed is different from the position in the vehicle characteristic screen 250. In a vehicle characteristic screen 350 of this modification, a "DEF" icon 351 is provided rightward of the characteristic state icon column 168. The "DEF" icon 351 can be used by operating the switches 41 to 43 when in each of the characteristic state icon columns 162 to 168 the characteristic state becomes selectable. For example, when the characteristic state icon column 162 becomes in the selectable state, the frame display 172 moves to the "DEF" icon 351 as the switch 41 is pressed while the frame display 172 is provided at the forwardmost icon "1". When the switch 42 is pressed in this state, only the frame display 172 moves to the characteristic state corresponding to the in-advance setting state of the PWR characteristic. The same applies to the other characteristics such as the TCS characteristic.

FIG. 11C shows a modification in which at least one of the "DEF" icons are different from those on the vehicle characteristic screen 250. On a vehicle characteristic screen 450 of this modification, while the "DEF" icons 255 to 258 are identical with those of the vehicle characteristic screen 250, a "DEF" icon 451 shared by three characteristics, i.e., the PWR characteristic, the TCS characteristic, and the SCS characteristic, is additionally provided as compared to the vehicle characteristic screen 250. When a characteristic state becomes selectable in the PWR characteristic, the TCS characteristic, or the SCS characteristic, the "DEF" icon 451 becomes selectable by operating the switch 41 or 43. For example, when the characteristic state icon column 162 becomes in the selectable state, the frame display 172 moves to the position of the "DEF" icon 451 as the switch 43 is pressed while the frame display 172 is provided at the rearmost icon "4". When the switch 42 is pressed in this state, the frame display moves to the characteristic states corresponding to the in-advance setting state, simultaneously for the three characteristics, i.e., the PWR characteristic, the TCS characteristic, and the SCS characteristic.

As described above, because the "DEF" icon is used in each characteristic, the frame display after the movement differentiates the aspect of the characteristic state icon corresponding to the in-advance setting content from the aspects of all of the remaining icons. Before the "DEF" icon is used, in each characteristic, the frame display causes the display aspects of the characteristic state icon corresponding to the characteristic state stored in the related characteristic storage 72 in association with the related characteristic currently selected as the operation target (i.e., the currently-selected characteristic state) to be different from the display aspects of the other characteristic state icons. When the "DEF" icon is used, the frame display moves to the position where the characteristic state icon corresponding to the in-advance setting content is provided. With this, when the currently-selected characteristic state is different from the characteristic state corresponding to the in-advance setting content, the frame display causes the display aspect of the characteristic state icon corresponding to the in-advance setting content to be different from the display aspect of the characteristic state icon of the currently-selected characteristic state and the display aspects of the other characteristic state icons. The rider R is able to recognize the positional relationship between the characteristic state icon of the currently-selected characteristic state and the characteristic state icon corresponding to the in-advance setting content, by recognizing in what manner the frame display moves before and after the "DEF" icon is used. Furthermore, when the frame display is then moved to the characteristic state icon which is the target of change, it is easy to remember the positional relationship between the characteristic state icon corresponding to the in-advance setting content and the characteristic state icon which is the target of change with reference to the memory just before the present moment, because which characteristic state icon corresponds to the in-advance setting content is checked just before the present moment. This makes it possible to adjust a vehicle characteristic with reference to the in-advance setting content, without relying on the long-term memory.

The following will describe another modification. In the embodiment above, in the vehicle characteristic screen 150 the aspect of the characteristic state icon corresponding to the characteristic state associated with the currently-selected related characteristic is arranged to be different from the aspects of the other characteristic state icons, by the frame displays 171 to 178. Alternatively, by means of another display aspect, the aspect of the characteristic state icon corresponding to the characteristic state associated with the currently-selected related characteristic may be arranged to be different from the aspects of the other characteristic state icons. For example, an arrow or the like may be displayed in the vicinity of the characteristic state icon corresponding to the characteristic state associated with the currently-selected related characteristic. Alternatively, the color of that characteristic state icon may be arranged to be different from the colors of the other characteristic state icons. Furthermore, the background of that characteristic state icon may be arranged to be different from the backgrounds of the other characteristic state icons.

In addition to the above, in the embodiment above, the display aspect of the characteristic state icon corresponding to the in-advance setting content is arranged to be different from those of the other characteristic state icons, by causing the background color of that characteristic state icon to be different by means of the background displays 222 to 228. Alternatively, by means of another display aspect, the display aspect of the characteristic state icon corresponding to the in-advance setting content may be arranged to be different from the display aspects of the other characteristic state icons. For example, an arrow or the like may be displayed in the vicinity of the characteristic state icon corresponding to the in-advance setting content. Furthermore, the color of that characteristic state icon may be arranged to be different from the colors of the other characteristic state icons. Furthermore, that characteristic state icon may be surrounded by a frame which is different in color from the frame displays 172 to 178.

In the embodiment above, in the SUS characteristic screen 190, the levels of the respective damping force characteristics associated with the currently-selected manual state are indicated by the level bar displays 212 to 215. Alternatively, by means of a display aspect different from the level bar displays 212 to 215, the levels of the respective damping force characteristics may be indicated. For example, arrows indicating the positions corresponding to the levels of the damping force characteristics may be displayed for the scale displays 202 to 205.

In the embodiment above, the icons are represented by character strings each expressing an item corresponding to the icon in a simplified form, a number indicating the level, or the like. The icons, however, may be represented in different ways. For example, the icons may be represented by figures, other signs, and illustrations, instead of the numbers and texts.

In the embodiment above, the state in which the related characteristic or the vehicle characteristic is changeable is represented by inverting the black and white of the related characteristic icon column 161, the characteristic state icon column 162, or the like and the background thereof. In this regard, the state in which the related characteristic or the vehicle characteristic is changeable may be represented by a method different from the black and white inversion. For example, the state may be expressed by changing only the color of an icon or only the background color of an icon. Furthermore, the state in which the related characteristic or the vehicle characteristic is changeable may be expressed by displaying a figure, a sign, or the like. Instead of the inversion of the black and white, the color inversion of other two colors may be employed.

In addition to the above, the order of the related characteristic icon 151 and the characteristic icons 152 to 158 in the embodiment above may be changed. For example, the related characteristic icon 151 may be provided at the center or at the rightmost in the left/right direction. Furthermore, the forward/rearward direction and the left/right direction with respect to the direction in which the icons are lined up may be reversed as compared to the embodiment above. For example, while the related characteristic icon 151 and the characteristic icons 152 to 158 may be lined up in the forward/rearward direction, the related characteristic icon column 161 and the characteristic state icon columns 162 to 168 may be lined up in the left/right direction.

While in the embodiment above the handle 5 is a separate handle, the handle of the present invention may be a one-piece handlebar. The separate handle is a handle arranged such that handlebars are connected to front forks without the intermediary of a handle crown. The one-piece handlebar is a handle arranged such that a handlebar is directly connected to a handle crown.

Furthermore, in the embodiment above, the setting content is changed in accordance with an operation of the setting operation unit 120 on the vehicle characteristic screen 150 and the SUS characteristic screen 190. Alternatively, a switch for changing the setting content on the vehicle characteristic screen 150 and the SUS characteristic screen 190 may be provided in addition to the setting operation unit 120.

## Claims

1. A saddle type vehicle (1) comprising:
a vehicle body frame (4) supporting a power source (9);
a seat (11) mounted on the vehicle body frame (4);
a steering handle (5) provided forward of the seat (11);
a right grip section (5c) and a left grip section (5d) which are provided at a right end portion and a left end portion of the steering handle (5) in a vehicle left/right direction, respectively;
a display unit (15) which is provided forward of the seat (11) in a vehicle forward/rearward direction and between the right grip section (5c) and the left grip section (5d) in the vehicle left/right direction, and includes a display surface (15a);
an operation unit (120) which is supported by the steering handle (5), is configured to be operable by a hand gripping at least one of the right grip section (5c) and the left grip section (5d), and is electrically connected to the display unit (15);
a vehicle characteristic change controller (101, 201) with which a vehicle characteristic is changeable as one of characteristic states is selected in accordance with a content of an operation of the operation unit (120),
**characterized in that** the display unit (15) is configured to display, on the display surface (15a),
a vehicle characteristic icon (152-158), indicating the vehicle characteristic, and vehicle characteristic state icons, indicating characteristic states of the vehicle characteristic, in an aspect of being lined up in one of the vehicle forward/rearward direction and the vehicle left/right direction, and
an icon of at least a currently-selected characteristic state among the vehicle characteristic state icons in an aspect different from aspects of the other icons, and an icon of a characteristic state which is set in advance in an aspect different from the aspect of the icon of the currently-selected characteristic state and the aspects of the other icons, when the currently-selected characteristic state is different from the characteristic state set in advance, wherein, when the vehicle characteristic is a first vehicle characteristic, the vehicle characteristic icon (152-158) is a first vehicle characteristic icon (152-158), and the vehicle characteristic state icons are first vehicle characteristic state icons, and the display unit (15) is further configured to display, on the display surface (15a),
a second vehicle characteristic icon, indicating a second vehicle characteristic, and
second vehicle characteristic state icons, indicating characteristic states of the second vehicle characteristic, in an aspect of being lined up in the one of the vehicle forward/rearward direction and the vehicle left/right direction,
the first vehicle characteristic icon (152-158) and the second vehicle characteristic icon (152-158) in an aspect of being lined up in the other one of the vehicle forward/rearward direction and the vehicle left/right direction, and
the first vehicle characteristic state icons and the second vehicle characteristic state icons in an aspect of being lined up in the other one of the directions.

2. The saddle type vehicle (1) according to claim 1, **characterized in that** the display unit (15) is further configured to display, on the display surface (15a), an icon of at least a currently selected characteristic state among the second vehicle characteristic state icons in an aspect different from aspects of the other icons, and an icon of the characteristic state set in advance in an aspect different from both of the aspect of the icon of the currently-selected characteristic state and the aspects of the other icons, when the currently-selected characteristic state is different from the characteristic state set in advance.

3. The saddle type vehicle (1) according to claim 1 or 2, **characterized by** a related characteristic storage (72) configured to store a related characteristic in which a first vehicle characteristic state which is one of the characteristic states of the first vehicle characteristic is associated with a second vehicle characteristic state which is one of the characteristic states of the second vehicle characteristic, wherein the related characteristic storage (72) is configured to store at least a first related characteristic and a second related characteristic, one of which is selected in accordance with a content of an operation of the operation unit (120).

4. The saddle type vehicle (1) according to claim 3, **characterized in that** the display unit (15) is further configured to display, on the display surface (15a), based on the related characteristic stored in the related characteristic storage (72), a related characteristic icon (151), indicating the related characteristic, a first related characteristic icon indicating the first related characteristic, and a second related characteristic icon indicating the second related characteristic in an aspect of being lined up in the one of the vehicle forward/rearward direction and the vehicle left/right direction.

5. The saddle type vehicle (1) according to claim 4, **characterized in that** the display unit (15) is further configured to display, on the display surface (15a), based on the related characteristic stored in the related characteristic storage (72), the related characteristic icon (151) and the first vehicle characteristic icon (152-158) in an aspect of being lined up in the other one of the vehicle forward/rearward direction and the vehicle left/right direction, the first related characteristic icon and the first vehicle characteristic state icons in an aspect of being lined up in the other one of the vehicle forward/rearward direction and the vehicle left/right direction, and the second related characteristic icon and the first vehicle characteristic state icons in an aspect of being lined up in the other one of the vehicle forward/rearward direction and the vehicle left/right direction.

6. The saddle type vehicle (1) according to claim 4 or 5, **characterized in that** the display unit (15) is further configured to display, on the display surface (15a), based on the related characteristic stored in the related characteristic storage (72), an icon of at least a currently selected related characteristic among the first related characteristic and the second related characteristic in an aspect different from aspects of the other icons.

7. The saddle type vehicle (1) according to any one of claims 4 to 6, **characterized in that** the display unit (15) is further configured to display, on the display surface (15a), based on the related characteristic stored in the related characteristic storage (72), each of the icons of the characteristic states associated with the currently selected related characteristic among the first characteristic state icons and the second characteristic state icons in an aspect different from aspects of the other icons.

8. The saddle type vehicle (1) according to any one of claims 4 to 7, **characterized in that,** the number of times of an operation of the operation unit (120) required to arrange one of the first related characteristic and the second related characteristic to be selectable after the display unit (15) starts to display the first vehicle characteristic icon (152-158), the second vehicle characteristic icon (152-158), the first vehicle characteristic state icons, the second vehicle characteristic state icons, the related characteristic icon (151), the first related characteristic icon, and the second related characteristic icon is smaller than the number of times of an operation of the operation unit (120) required to arrange the first vehicle characteristic or the second vehicle characteristic to be selectable from the characteristic states.

9. The saddle type vehicle (1) according to any one of claims 1 to 8, **characterized in that,** the vehicle characteristic becomes selectable from the characteristic states while the display unit (15) is displaying the vehicle characteristic icon (152-158) and the vehicle characteristic state icons on the display surface (15a).

10. The saddle type vehicle (1) according to any one of claims 1 to 9, **characterized in that** the display surface (15a) is substantially rectangular in shape.

11. The saddle type vehicle (1) according to any claim 10, **characterized in that** the one of the vehicle forward/rearward direction and the vehicle left/right direction is in parallel to short sides of the rectangular display surface (15a), and the other one of the vehicle forward/rearward direction and the vehicle left/right direction is in parallel to the long sides of the rectangular display surface (15a).

## Patentansprüche

1. Ein Sattel-Typ-Fahrzeug (1), das umfasst:
einen Fahrzeug-Körper-Rahmen (4), der eine Leistungs-Quelle (9) lagert;
einen Sitz (11), der an dem Fahrzeug-Körper-Rahmen (4) montiert ist;
eine Lenkstange (5), die vor dem Sitz (11) vorgesehen ist;
einen rechten Griff-Abschnitt (5c) und einen linken Griff-Abschnitt (5d), die jeweils an einem rechten End-Abschnitt und einem linken End-Abschnitt der Lenkstange (5), in einer Fahrzeug-Links/Rechts-Richtung, vorgesehen sind;
eine Anzeige-Einheit (15), die vor dem Sitz (11) in einer Fahrzeug-Vorwärts/Rückwärts-Richtung und zwischen dem rechten Griff-Abschnitt (5c) und den linken Griff-Abschnitt (5d) in der Fahrzeug-Links/Rechts-Richtung vorgesehen ist, und
eine Anzeige-Fläche (15a) beinhaltet;
eine Betriebs-Einheit (120), die durch die Lenkstange (5) gelagert ist, ist konfiguriert, um durch eine Hand betreibbar zu sein, die zumindest einen von dem rechten Griff-Abschnitt (5c) und dem linken Griff-Abschnitt (5d) greift, und die elektrisch mit der Anzeige-Einheit (15) verbunden ist;
eine Fahrzeug-Charakteristik-Änderungs-Steuerung (101, 201), mit der eine Fahrzeug-Charakteristik änderbar ist, wenn einer von Charakteristik-Zuständen in Übereinstimmung mit einem Umfang einer Betätigung der Betriebs-Einheit (120) ausgewählt ist,
**dadurch gekennzeichnet, dass** die Anzeige-Einheit (15) konfiguriert ist, um auf der Anzeige-Fläche (15a) anzuzeigen,
ein Fahrzeug-Charakteristik-Piktogramm (152-158), das die Fahrzeug-Charakteristik angibt, und Fahrzeug-Charakteristik-Zustands-Piktogramme, die Charakteristik-Zustände der Fahrzeug-Charakteristik angeben, in einem Aspekt aufgereiht in einer von der Fahrzeug-Vorwärts/Rückwärts-Richtung und der Fahrzeug-Links/Rechts-Richtung, und
ein Piktogramm von mindestens einem momentan ausgewählten Charakteristik-Zustand von den Fahrzeug-Charakteristik-Zustands-Piktogrammen in einem Aspekt unterschiedlich von dem Aspekt der anderen Piktogramme, und ein Piktogramm von einem Charakteristik-Zustand, der in vornherein gesetzt ist, in einem Aspekt unterschiedlich von dem Aspekt des Piktogramms des momentan ausgewählten Charakteristik-Zustands, und des Aspekt der anderen Piktogramme, wenn der momentan ausgewählte Charakteristik-Zustand unterschiedlich von dem gesetzten Charakteristik-Zustand in vorherein ist, wobei, wenn die Fahrzeug-Charakteristik eine erste Fahrzeug-Charakteristik ist, ist das Fahrzeug-Charakteristik-Piktogramm (152-158) ein erstes Fahrzeug-Charakteristik-Piktogramm (152-158) und die Fahrzeug-Charakteristik-Zustands-Piktogramme sind erste Fahrzeug-Charakteristik-Zustands-Piktogramme, und die Anzeige-Einheit (15) ist weiter konfiguriert um auf der Anzeige-Fläche (15a) anzuzeigen, ein zweites Fahrzeug-Charakteristik-Piktogramm, das eine zweite Fahrzeug-Charakteristik angibt, und zweite Fahrzeug-Charakteristik-Zustands-Piktogramme die Charakteristik-Zustände von der zweiten Fahrzeug-Charakteristik angeben, in einem Aspekt aufgereiht in der einen von der Fahrzeug-Vorwärts/Rückwärts-Richtung und der Fahrzeug-Links/Rechts-Richtung,
die ersten Fahrzeug-Charakteristik-Piktogramme (152-158) und die zweiten Fahrzeug-Charakteristik-Piktogramme (152-158), in einem Aspekt aufgereiht zu sein in der anderen von der Fahrzeug-Vorwärts/Rückwärts-Richtung und der Fahrzeug-Links/Rechts-Richtung, und
die ersten Fahrzeug-Charakteristik-Zustands-Piktogramme und die zweite Fahrzeug-Charakteristik-Zustands-Piktogramme in einem Aspekt aufgereiht zu sein in der anderen von den Richtungen.

2. Das Sattel-Typ-Fahrzeug (1) gemäß Anspruch 1, **dadurch gekennzeichnet, dass** die Anzeige-Einheit (15) weiterhin konfiguriert ist, um auf der Anzeige-Fläche (15a) anzuzeigen, ein Piktogramm von zumindest einem momentan ausgewählten Charakteristik-Zustand von den zweiten Fahrzeug-Charakteristik-Zustands-Piktogrammen in einem Aspekt unterschiedlich von dem Aspekt der anderen Piktogramme, und ein Piktogramm von dem Charakteristik-Zustand gesetzt in vorherein in einem Aspekt unterschiedlich von beiden von den Aspekten von dem Piktogramm des momentan ausgewählten Charakteristik-Zustands und dem Aspekt der anderen Piktogramme, wenn der momentan ausgewählte Charakteristik-Zustand unterschiedlich von dem im Vorherein gesetzten Charakteristik-Zustand ist.

3. Das Sattel-Typ-Fahrzeug (1) gemäß Anspruch 1 oder 2, **gekennzeichnet durch** einen Zugehörig-Charakteristik-Speicher (72) der konfiguriert ist, um eine Zugehörig-Charakteristik, in welcher ein erster Charakteristik-Zustand der einer von den Charakteristik-Zuständen von der ersten Fahrzeug-Charakteristik einem zweiten Fahrzeug-Charakteristik-Zustand zugeordnet ist, der einer von den Charakteristik-Zuständen von der zweiten Fahrzeug-Charakteristik ist, zu speichern, wobei Zugehörig-Charakteristik-Speicher (72) konfiguriert ist, um zumindest eine erste Zugehörig-Charakteristik und eine zweite Zugehörig-Charakteristik zu speichern, eine von denen ist ausgewählt in Übereinstimmung mit einem Umfang einer Betätigung der Betriebs-Einheit (120).

4. Das Sattel-Typ-Fahrzeug (1) gemäß Anspruch 3, **dadurch gekennzeichnet, dass** die Anzeige-Einheit (15) weiter konfiguriert ist, um auf der Anzeige-Fläche (15a) anzuzeigen, auf Grund der Zugehörig-Charakteristik, gespeichert in der Zugehörig-Charakteristik-Speicher (72), ein Zugehörig-Charakteristik-Piktogramm (151), das die Zugehörig-Charakteristik angibt, ein erstes Zugehörig-Charakteristik-Piktogramm, das die erste Zugehörig-Charakteristik angibt, und ein zweites Zugehörig-Charakteristik-Piktogramm, das die zweite Zugehörig-Charakteristik angibt in einem Aspekt aufgereiht in der einen von der Fahrzeug-Vorwärts/Rückwärts-Richtung und der Fahrzeug-Links/Rechts-Richtung.

5. Das Sattel-Typ-Fahrzeug (1) gemäß Anspruch 4, **dadurch gekennzeichnet, dass** die Anzeige-Einheit (15) weiter konfiguriert ist, um auf der Anzeige-Fläche (15a) anzuzeigen, auf Grund der Zugehörig-Charakteristik, gespeichert in dem Zugehörig-Charakteristik-Speicher (72), das Zugehörig-Charakteristik-Piktogramm (151) und das erste Fahrzeug-Charakteristik-Piktogramm (152-158) in einem Aspekt aufgereiht in der anderen von den Fahrzeug-Vorwärts/Rückwärts-Richtung und der Fahrzeug-Links/Rechts-Richtung, das erste Zugehörig-Charakteristik-Piktogramm und die ersten Fahrzeug-Charakteristik-Zustands-Piktogramme in einem Aspekt aufgereiht in der anderen von der Fahrzeug-Vorwärts/Rückwärts-Richtung und der Fahrzeug-Links/Rechts-Richtung, und das zweite Zugehörig-Charakteristik-Piktogramm und die ersten Fahrzeug-Charakteristik-Zustands-Piktogramme in einen Aspekt aufgereiht in der anderen von der Fahrzeug-Vorwärts/Rückwärts-Richtung und der Fahrzeug-Links/Rechts-Richtung.

6. Das Sattel-Typ-Fahrzeug (1) gemäß Anspruch 4 oder 5, **dadurch gekennzeichnet, dass** die Anzeige-Einheit (15) weiter konfiguriert ist, um auf der Anzeige-Fläche (15a) anzuzeigen, auf Grund von der Zugehörig-Charakteristik, gespeichert in dem Zugehörig-Charakteristik-Speicher (72), ein Piktogramm von zumindest einer momentan ausgewählten Zugehörig-Charakteristik von der ersten Zugehörig-Charakteristik und der zweiten Zugehörig-Charakteristik in einem Aspekt unterschiedlich von dem Aspekt der anderen Piktogramme.

7. Das Sattel-Typ-Fahrzeug (1) gemäß irgendeinem der Ansprüche 4 bis 6, **dadurch gekennzeichnet, dass** die Anzeige-Einheit (15) weiter konfiguriert ist um auf der Anzeige-Fläche (15a) anzuzeigen, auf Grund der Zugehörig-Charakteristik, gespeichert in dem Zugehörig-Charakteristik-Speicher (72), jede von dem Piktogrammen in den Charakteristik-Zuständen, zugeordnet mit dem momentan ausgewählten Zugehörig-Charakteristik von den ersten Charakteristik-Zustands-Piktogrammen und den zweiten Charakteristik-Zustands-Piktogrammen in einem Aspekt unterschiedlich von dem Aspekt der anderen Piktogramme.

8. Das Sattel-Typ-Fahrzeug (1) gemäß irgendeinem der Ansprüche 4 bis 7, **dadurch gekennzeichnet, dass** die Anzahl der Ausführungen einer Betätigung der Betriebs-Einheit (120), gefordert zur Anordnung eines von der ersten Zugehörig-Charakteristik und der zweiten Zugehörig-Charakteristik, die auszuwählen sind, nachdem die Anzeige-Einheit (15) beginnt, das erste Fahrzeug-Charakteristik-Piktogramm (152-158), das zweite Fahrzeug-Charakteristik-Piktogramm (152-158), die ersten Fahrzeug-Charakteristik-Zustands-Piktogramme, die zweiten Fahrzeug-Charakteristik-Zustands-Piktogramme, das Zugehörig-Charakteristik-Piktogramm (151), das erste Zugehörig-Charakteristik-Piktogramm, und das zweite Zugehörig-Charakteristik-Piktogramm, geringer ist als die Anzahl der Betätigungen der Betätigungseinheit (120) gefordert zur Anordnung der ersten Fahrzeug-Charakteristik oder der zweiten Fahrzeug-Charakteristik, die von den Charakteristik-Zuständen auswählbar sind.

9. Das Sattel-Typ-Fahrzeug (1) gemäß irgendeinem der Ansprüche 1 bis 8, **dadurch gekennzeichnet, dass** die Fahrzeug-Charakteristik auswählbar wird von den Charakteristik-Zuständen, während die Anzeige-Einheit (15) die Fahrzeug-Charakteristik-Piktogramme (152-158) und die Fahrzeug-Charakteristik-Zustands-Piktogramme auf der Anzeige-Fläche (15a) anzeigt.

10. Das Sattel-Typ-Fahrzeug (1) gemäß irgendeinem der Ansprüche 1 bis 9, **dadurch gekennzeichnet, dass** die Anzeige-Fläche (15a) im Wesentlichen rechtwinklig in der Form ist.

11. Das Sattel-Typ-Fahrzeug (1) gemäß irgendeinem von Anspruch 10, **dadurch gekennzeichnet, dass** die eine von der Fahrzeug-Vorwärts/Rückwärts-Richtung und der Fahrzeug-Links/Rechts-Richtung parallel zu kurzen Seiten der rechtwinkligen Anzeige-Fläche (15a) ist und die andere von den Fahrzeug-Vorwärts/RückwärtsRichtung und der Fahrzeug-Links/Rechts-Richtung parallel zu den langen Seiten der rechtwinkligen Anzeige-Fläche (15a) ist.

## Revendications

1. Véhicule de type à selle (1) comprenant :
un cadre de véhicule (4) supportant une source d'alimentation (9),
un siège (11) monté sur le cadre de véhicule (4),
un guidon (5) prévu en avant du siège (11),
une section de préhension droite (5c) et une section de préhension gauche (5d) qui sont respectivement prévues à l'extrémité droite et à l'extrémité gauche du guidon (5) dans la direction gauche droite du véhicule,
une unité d'affichage (15) qui est prévue en avant du siège (11) dans la direction avant arrière du véhicule et entre la section de préhension droite (5c) et la section de préhension gauche (5d) dans la direction gauche droite du véhicule, et qui inclut une surface d'affichage (15a),
une unité fonctionnelle (120) qui est supportée par le guidon (5), qui est configurée pour pouvoir être manoeuvrée par une préhension manuelle d'au moins l'une de la section de préhension droite (5c) et de la section de préhension gauche (5d), et qui est reliée électriquement à l'unité d'affichage (15),
un contrôleur de modification de caractéristiques du véhicule (101, 201) avec lequel une caractéristique du véhicule peut être modifiée lorsque l'un des états caractéristiques est sélectionné en fonction du contenu d'une manoeuvre de l'unité fonctionnelle (120),
**caractérisé en ce que** l'unité d'affichage (15) est configurée pour afficher sur la surface d'affichage (15a) une icône de caractéristique du véhicule (152 à 158) indiquant la caractéristique du véhicule et des icônes d'états caractéristiques du véhicule indiquant des états caractéristiques de la caractéristique du véhicule, selon un aspect consistant à être alignées dans l'une de la direction avant arrière du véhicule et de la direction gauche droite du véhicule, et
une icône d'au moins un état caractéristique en cours de sélection parmi des icônes d'états caractéristiques du véhicule en présentant un aspect qui diffère des aspects des autres icônes, ainsi qu'une icône d'un état caractéristique qui est établi à l'avance selon un aspect qui diffère de l'aspect de l'icône de l'état caractéristique en cours de sélection et des aspects des autres icônes, lorsque l'état caractéristique en cours de sélection est différent de l'état caractéristique établi à l'avance, dans lequel, lorsque la caractéristique du véhicule est une première caractéristique du véhicule, l'icône de caractéristique du véhicule (152 à 158) est une première de caractéristique du véhicule (152 à 158) et les icônes d'états caractéristiques du véhicule sont des premières icônes d'états caractéristiques, l'unité d'affichage (15) est en outre configurée pour afficher sur la surface d'affichage (15a) une seconde icône de caractéristique du véhicule indiquant une seconde caractéristique du véhicule et des secondes icônes d'états caractéristiques du véhicule indiquant des états caractéristiques de la seconde caractéristique du véhicule selon un aspect consistant à être alignées dans l'une de la direction avant arrière du véhicule et de la direction gauche droite du véhicule,
la première icône de caractéristique du véhicule (152 à 158) et la seconde icône de caractéristique du véhicule (152 à 158) étant représentées comme étant alignées dans l'autre de la direction avant arrière du véhicule et de la direction gauche droite du véhicule, et
les premières icônes d'états caractéristiques du véhicule et les secondes icônes d'états caractéristiques du véhicule étant représentées comme étant alignées dans l'autre des directions.

2. Véhicule de type à selle (1) selon la revendication 1, **caractérisé en ce que** l'unité d'affichage (15) est en outre configurée pour afficher sur la surface d'affichage (15a) une icône d'au moins un état caractéristique en cours de sélection parmi les secondes icônes d'états caractéristiques du véhicule selon un aspect qui diffère des aspects des autres icônes, ainsi qu'une icône de l'état caractéristique établi à l'avance selon un aspect qui diffère à la fois de l'aspect de l'icône de l'état caractéristique en cours de sélection et des aspects des autres icônes, lorsque l'état caractéristique en cours de sélection est différent de l'état caractéristique établi à l'avance.

3. Véhicule de type à selle (1) selon la revendication 1 ou la revendication 2, **caractérisé par** une mémoire de caractéristiques apparentées (72) configurée pour stocker une caractéristique apparentée dans laquelle un premier état caractéristique du véhicule, qui est l'un des états caractéristiques de la première caractéristique du véhicule, est associé à un second état caractéristique du véhicule, qui est l'un des états caractéristiques de la seconde caractéristique du véhicule, la mémoire de caractéristiques apparentées (72) étant configurée pour stocker au moins une première caractéristique apparentée et une seconde caractéristique apparentée, l'une d'entre elles étant sélectionnée en fonction du contenu de la manoeuvre de l'unité fonctionnelle (120).

4. Véhicule de type à selle (1) selon la revendication 3, **caractérisé en ce que** l'unité d'affichage (15) est en outre configurée pour afficher, sur la surface d'affichage (15a), sur la base de la caractéristique apparentée stockée dans la mémoire de caractéristiques apparentées (72), une icône de caractéristique apparentée (151) indiquant la caractéristique apparentée, une première icône de caractéristique apparentée indiquant la première caractéristique apparentée et une seconde icône de caractéristique apparentée indiquant la seconde caractéristique apparentée selon un aspect d'alignement dans l'une de la direction avant arrière du véhicule et de la direction gauche droite du véhicule.

5. Véhicule de type à selle (1) selon la revendication 4, **caractérisé en ce que** l'unité d'affichage (15) est en outre configurée pour afficher, sur la surface d'affichage (15a), sur la base de la caractéristique apparentée stockée dans la mémoire de caractéristiques apparentées (72), l'icône de caractéristique apparentée (151) et la première icône de caractéristique du véhicule (152 à 158) en alignement dans l'autre de la direction avant arrière du véhicule et de la direction gauche droite du véhicule, la première icône de caractéristique apparentée et les premières icônes d'états caractéristiques du véhicule en alignement dans l'autre de la direction avant arrière du véhicule et de la direction gauche droite du véhicule, et la seconde icône de caractéristique apparentée et les premières icônes d'états caractéristiques du véhicule en alignement dans l'autre de la direction avant arrière du véhicule et de la direction gauche droite du véhicule.

6. Véhicule de type à selle (1) selon la revendication 4 ou la revendication 5, **caractérisé en ce que** l'unité d'affichage (15) est en outre configurée pour afficher, sur la surface d'affichage (15a), sur la base de la caractéristique apparentée stockée dans la mémoire de caractéristiques apparentées (72), une icône d'au moins une caractéristique apparentée en cours de sélection parmi la première caractéristique apparentée et la seconde caractéristique apparentée selon un aspect différent des aspects des autres icônes.

7. Véhicule de type à selle (1) selon l'une quelconque des revendications 4 à 6, **caractérisé en ce que** l'unité d'affichage (15) est en outre configurée pour afficher, sur la surface d'affichage (15a), sur la base de la caractéristique apparentée stockée dans la mémoire de caractéristiques apparentées (72), chacune des icônes des états caractéristiques associés à la caractéristique apparentée en cours de sélection parmi les premières icônes d'états caractéristiques et les secondes icônes d'états caractéristiques selon un aspect différent des aspects des autres icônes.

8. Véhicule de type à selle (1) selon l'une quelconque des revendications 4 à 7, **caractérisé en ce que** le nombre de fois nécessaire pour une manoeuvre de l'unité fonctionnelle (120), requise pour agencer l'une de la première caractéristique apparentée et de la seconde caractéristique apparentée pour être sélectionnable après que l'unité d'affichage (15) a commencé à afficher la première icône de caractéristique du véhicule (152 à 158), la seconde icône de caractéristique du véhicule (152 à 158), les premières icônes d'états caractéristiques du véhicule, les secondes icônes d'états caractéristiques du véhicule, l'icône de caractéristique apparentée (151), la première icône de caractéristique apparentée et la seconde icône de caractéristique apparentée, est plus petit que le nombre de fois nécessaire pour une manoeuvre de l'unité fonctionnelle (120), requise pour agencer la première caractéristique du véhicule ou la seconde caractéristique du véhicule pour être sélectionnable à partir des états caractéristiques.

9. Véhicule de type à selle (1) selon l'une quelconque des revendications 1 à 8, **caractérisé en ce que** la caractéristique du véhicule devient sélectionnable à partir des états caractéristiques alors que l'unité d'affichage (15) affiche l'icône de caractéristique du véhicule (152 à 158) et les icônes d'états caractéristiques du véhicule sur la surface d'affichage (15a).

10. Véhicule de type à selle (1) selon l'une quelconque des revendications 1 à 9, **caractérisé en ce que** la surface d'affichage (15a) est de forme pratiquement rectangulaire.

11. Véhicule de type à selle (1) selon la revendication 10, **caractérisé en ce que** l'une de la direction avant arrière du véhicule et de la direction gauche droite du véhicule est parallèle aux côtés courts de la surface d'affichage (15a) rectangulaire, et **en ce que** l'autre de la direction avant arrière du véhicule et de la direction gauche droite du véhicule est parallèle aux côtés longs de la surface d'affichage (15a) rectangulaire.
